# EUROPÄISCHE PATENTANMELDUNG

(11) **EP 1 170 686 A1**
(43) Veröffentlichungstag der Anmeldung: **09.01.2002**
(21) Anmeldenummer: 01114264.3
(22) Anmeldetag: 12.06.2001
(51) Int. Cl.: G06F 17/60

(54) **Warenempfangssystem und zugeordnetes Bestellungsbestätigungssystem, insbesondere für ein Bestell- und Belieferungsprogramm**

(30) Priorität: 03.07.2000 DE 10032270
(71) Anmelder: Figger, Axel, 59427 Unna (DE); Brandherm, Ulrich, 59269 Beckum (DE); Hoffmeier, Alfons, 59269 Beckum (DE)
(72) Erfinder: Figger, Axel, 59427 Unna (DE); Brandherm, Ulrich, 59269 Beckum (DE); Hoffmeier, Alfons, 59269 Beckum (DE)
(74) Vertreter: Jordan, Volker, Dr.

(57) **Zusammenfassung**

Die Erfindung betrifft nach einem Aspekt ein System (10) zum automatisierten Bestätigen von Warenbestellungen und zum automatisierten Annehmen von auf die Warenbestellungen gelieferter Ware unter automatisierter Übermittlung von sich auf die betreffende Ware beziehenden Daten. Die Erfindung betrifft ferner ein bestellerseitiges oder empfängerseitiges Warenempfangssystem (14) und ein lieferantenseitiges oder anbieterseitiges Bestellungsbestätigungssystem (12).

## Beschreibung

Die Erfindung betrifft allgemein die Bearbeitung von beispielsweise über das Internet aufgegebenen Warenbestellungen sowie die Lieferung der bestellten Ware und deren Annahme durch einen Adressaten.

Warenbestellungen über Telefon, über das Internet oder auf sonstige Weise sind bekannt. Beispielsweise ist es mittlerweile Gang und Gäbe, Bücher, CDs und dergleichen bei entsprechenden Anbietern über das Internet zu bestellen. Die bestellte Ware wird regelmäßig zu einem zum Zeitpunkt der Bestellung noch nicht bekannten Zeitpunkt (Datum, Uhrzeit) ausgeliefert, beispielsweise per Post oder durch einen Lieferdienst. Bei derartigen Waren kann man es in der Regel hinnehmen, dass die Ware nicht im ersten Anlauf zugestellt werden kann, sollte der Empfänger nicht anwesend sein. Im Falle einer Lieferung der Ware per Post kann man sich dann die Postsendung in einem der Lieferadresse zugeordneten Postamt abholen. Bei Lieferdiensten ist es häufig möglich, auf den ersten, nicht erfolgreichen Lieferversuch telefonisch einen bestimmten Liefertermin auszumachen. Häufig kann die Lieferung auch bei Nachbarn abgegeben werden, wenn der Adressat nicht zu Hause ist. Bei Päckchen mit kleineren Außenabmessungen kommt es unter Umständen auch in Betracht, dass der Postbote oder der Lieferservice die Lieferung in den normalen Briefkasten einsteckt. Ob der Postbote oder der Lieferservice von derartigen Möglichkeiten Gebrauch macht, ist aber schwer vorherzusehen.

Im Falle von termingebunden benötigter Ware oder im Falle von verderblicher Ware, wie Lebensmittel, wird man sich auf derartige Unsicherheiten in der Regel nicht einlassen wollen. Die Bestellung von Lebensmitteln über das Internet oder telefonisch für die Lieferung in die Wohnung oder einem anderen Ort kommt deshalb praktisch nur für Personengruppen in Betracht, die zu regelmäßigen, mit den Lieferzeiten des betreffenden Lieferservice kompatiblen Zeiten zu Hause beziehungsweise an der betreffenden Lieferadresse anwesend sind.

Die Erfindung trachtet ein System bereitzustellen, das die Anlieferung von Waren gestattet, ohne dass an der Lieferadresse jemand zugegen sein muss.

Zur Lösung dieser Aufgabe wird nach einem ersten Aspekt der Erfindung ein System zum automatisierten Bestätigen von Warenbestellungen und zum automatisierten Annehmen von auf die Warenbestellungen gelieferter Ware unter automatisierter Übermittlung von sich auf die betreffende Ware beziehenden Daten vorgeschlagen. Das erfindungsgemäße System umfasst:
a) wenigstens ein bestellerseitiges oder empfängerseitiges Warenempfangssystem, das eine Steuereinheit, einen Datenspeicher, eine elektronische Kommunikationseinheit, eine Warenempfangsvorrichtung und eine Identifikationseinheit aufweist;
b) wenigstens ein lieferantenseitiges oder anbieterseitiges Bestellungsbestätigungssystem, das einen Datenspeicher und eine elektronische Kommunikationseinheit aufweist.

Das erfindungsgemäße Warenempfangssystem kann dafür ausgelegt sein:
a1) vermittels Datenkommunikation über seine Kommunikationseinheit sich auf eine anstehende Warenlieferung oder anstehende Warenlieferungen beziehende Daten automatisiert zu empfangen und in seinem Datenspeicher auf den empfangenden Daten beruhende Daten abzuspeichern, die die anstehende(n) Warenlieferung(en) identifizieren,
a2) in Antwort auf eine Annahmeanforderung sich auf gelieferte Ware beziehende Daten unter Vermittlung der Identifikationseinheit aufzunehmen und vermittels der Steuereinheit mit den im Datenspeicher abgespeicherten Daten zu vergleichen,
a3) im Falle, dass keine Annahmeanforderung vorliegt, die Annahmekapazität der Warenempfangsvorrichtung erschöpft ist oder der Vergleich zwischen den aufgenommenen Daten und den abgespeicherten Daten ergibt, dass die Annahmeanforderung nicht zulässig ist, die Warenempfangsvorrichtung in einem Abweismodus zu halten oder in diesen zu versetzen, in dem dadurch keine Ware angenommen wird, dass ein Warenaufnahmeraum der Warenempfangsvorrichtung von einer Außenseite her unzugänglich bleibt,
a4) im Falle, dass der Vergleich zwischen den aufgenommenen Daten und den abgespeicherten Daten ergibt, dass die Annahmeanforderung zulässig ist und die Annahmekapazität der Warenempfangsvorrichtung nicht erschöpft ist, die Warenempfangsvorrichtung in einen Annahmemodus zu versetzen, in dem die gelieferte Ware dadurch angenommen wird, dass die Ware von der Außenseite her in den Warenaufnahmeraum eingelassen wird, und
a5) nach oder im Zuge der Annahme von Ware den Erhalt der Ware automatisiert vermittels Datenkommunikation über seine Kommunikationseinheit an eine der angenommenen Ware zugeordnete Datenkommunikationsadresse, gegebenenfalls an das Bestellungsbestätigungssystem, zu bestätigen.

Das Bestellungsbetätigungssystem kann dafür ausgelegt sein:
b1) in Antwort auf dem Bestellbestätigungssystem eingegebene oder von diesem empfangene Daten, die sich auf wenigstens eine Warenbestellung beziehen und wenigstens einem vorgegebenen oder vorgebbaren Kriterium genügen, die Warenbestellung automatisiert dadurch zu bestätigen, dass es Daten, die sich auf wenigstens eine auf die Bestellung zu erfolgende Lieferung der bestellten Ware beziehen und die Lieferung identifizierende Daten umfassen, vermittels Datenkommunikation an eine der Warenbestellung zugeordnete Datenkommunikationsadresse, gegebenenfalls an das Warenempfangssystem, über seine Kommunikationseinheit automatisiert übermittelt.

Durch das erfindungsgemäße Warenempfangssystem wird ermöglicht, dass ein Lieferant oder sogar verschiedene Lieferanten jederzeit bestellte Ware abliefern können, ohne dass eine Person an der Lieferadresse anwesend sein muss, die die Ware annehmen und quittieren könnte. Um einem Missbrauch des Warenempfangssystems entgegenzuwirken und nur auf aufgegebene Bestellungen gelieferte Ware anzunehmen, übermittelt das Bestellungsbestätigungssystem die Lieferung beziehungsweise Lieferungen ankündigende und diese identifizierende Daten an eine der Warenbestellung zugeordnete Datenkommunikationsadresse (zweckmäßigerweise unmittelbar an das Warenempfangssystem), auf deren Grundlage das Warenempfangssystem im Falle eines Warenanlieferversuches (auf eine Annahmeanforderung) überprüfen kann, ob es sich um eine angekündigte, auf eine Bestellung erfolgende Lieferung handelt. Hierzu nimmt das Warenempfangssystem mittels einer beispielsweise einen Bar-Code-Leser oder ein durch einen Lieferboten zu betätigendes Tastenfeld aufweisenden Identifikationseinheit sich auf die gelieferte Ware beziehungsweise den Lieferversuch beziehende Daten auf und vergleicht diese mit den abgespeicherten, gegebenenfalls vom Bestellungsbestätigungssystem empfangenen Daten. Handelt es sich um eine angekündigte Lieferung auf eine Bestellung, so ist die Annahmeanforderung zulässig und die gelieferte Ware wird in einen Warenaufnahmeraum der Warenempfangsvorrichtung eingelassen, was als Annahme oder zumindest vorläufige Annahme der Ware angesehen werden kann. Damit der Lieferant beziehungsweise Anbieter die Anlieferung der Ware kontrollieren kann und auf eine erfolgte Anlieferung beispielsweise automatisch eine Rechnung erstellen oder eine Bankabbuchung veranlassen kann, bestätigt das Warenempfangssystem die Annahme der Ware.

Das Bestellungsbestätigungssystem kann beispielsweise einem Anbieter zugeordnet sein, der ein Warensortiment im eigenen Namen anbietet. Insbesondere (aber nicht ausschließlich) für eine derartige Situation ist es zweckmäßig, wenn das Bestellungsbestätigungssystem gleichzeitig als Bestellungsannahmesystem dient. Hierzu kann das Bestellungsbestätigungssystem dafür ausgelegt sein, vermittels Datenkommunikation über seine Kommunikationseinheit erfolgende Warenbestellungen automatisiert dadurch anzunehmen, dass es die Warenbestellung kennzeichnende Daten automatisiert in seinem Datenspeicher abspeichert oder per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Weiterbearbeitungssystem, übermittelt und die jeweils angenommene Warenbestellung automatisiert gemäß Merkmalsgruppe b1) bestätigt (Merkmalsgruppe b2a)).

Gemäß einer vorteilhaften Weiterbildung kann das Bestellungsbestätigungssystem in diesem Zusammenhang dafür ausgelegt sein, für eine angenommene Warenbestellung die zu liefernde Ware, die Lieferadresse und die anstehende Warenlieferung oder anstehenden Warenlieferungen identifizierende Daten vermittels Datenkommunikation über seine Kommunikationseinheit automatisiert an wenigstens eine fest eingestellte oder einstellbare oder an wenigstens eine der bestellten Ware oder der Lieferadresse zugeordnete oder an wenigstens eine einer bestellerseitigen Auswahl entsprechende Datenkommunikationsadresse zu übermitteln (Merkmalsgruppe b3a)).

Diese Ausbildung des Bestellungsbestätigungssystems macht es möglich, dass die für die Ausführung der Lieferung oder Lieferungen erforderlichen Daten an eine oder mehrere weitere Stellen übermittelt werden, bei denen es sich beispielsweise um Subunternehmer, Auslieferungslager, Lieferserviceunternehmen oder dergleichen handeln kann.

Eine andere Möglichkeit ist, dass der Betreiber des Bestellungsbestätigungssystems gewissermaßen nur als "Vermittler" tätig ist und beispielsweise als Empfangsadresse für Bestellungen betreffend verschiedene Anbieter oder Lieferanten fungiert. Insbesondere (aber nicht ausschließlich) für eine solche Situation ist es zweckmäßig, wenn das Bestellungsbestätigungssystem als Bestellungsweiterleitsystem dient. Hierzu kann das Bestellungsbestätigungssystem dafür ausgelegt sein, vermittels Datenkommunikation über seine Kommunikationseinheit erfolgende Warenbestellungen automatisiert per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Bestellungsannahmesystem, zu übermitteln und in Antwort auf eine Bestellungsannahme signalisierende, per Datenkommunikation empfangene Daten die jeweils angenommene Warenbestellung automatisiert gemäß Merkmalsgruppe b1) zu bestätigen (Merkmalsgruppe b2b)).

Eine besonders vorteilhafte Ausgestaltung des Bestellungsbetätigungssystems sieht vor, dass dieses dafür ausgelegt ist, automatisiert eine Überprüfung auf Plausibilität und gegenseitige Konsistenz von einen bestellerseitigen Lieferterminwunsch angebenden Daten, von einen bestellerseitigen Liefermengenwunsch angebenden Daten und von eine Warenlieferfähigkeit angebenden Daten sowie gegebenenfalls von eine Annahmekapazität der bestellerseitigen oder empfängerseitigen Warenempfangsvorrichtung angebenden Daten, vorzugsweise unter Berücksichtigung von Daten, die terminlich schon festgelegte Warenlieferungen vorangehender Warenbestellungen angeben, durchzuführen und die gemäß Merkmalsgruppe b1) zu übermittelnden, die Lieferung identifizierenden Daten einschließlich den Liefertermin oder die Liefertermine angebenden Daten nur dann zu übermitteln, wenn die überprüften Daten plausibel und gegenseitig konsistent sind. Dieser Weiterbildungsvorschlag sorgt für eine automatisierte Koordination beziehungsweise gegenseitige Abstimmung der Lieferterminwünsche des Bestellers, der Lieferfähigkeit des Anbieters und der Annahmekapazität der Warenempfangsvorrichtung, wobei die vorzugsweise vorgesehene Berücksichtigung von Daten betreffend terminlich schon festgelegten Warenlieferungen den Besteller davon entlastet, selbst eine entsprechende Koordination vorzunehmen.

In der Regel wird es zweckmäßig sein, dass das Warenempfangssystem gleichzeitig als Warenbestellsystem dient. Hierzu kann das Warenempfangssystem dafür ausgelegt sein, dass vermittels Datenkommunikation zwischen einem auswählbaren oder fest zugeordneten Bestellungsbestätigungssystem einerseits und dem Warenempfangssystem andererseits über deren Kommunikationseinheiten Warenbestellungen beim oder über das Bestellungsbestätigungssystem aufgegeben werden können.

Um einen Missbrauch am Empfangssystem mit besonders hoher Sicherheit auszuschließen, wird vorgeschlagen, dass das Warenempfangssystem dafür ausgelegt ist, im Falle einer zulässigen Annahmeanforderung die betreffende Ware zuerst vorläufig dadurch anzunehmen, dass die Ware von der Außenseite her in den Warenaufnahmeraum eingelassen wird, dann unter Vermittlung der Identifikationseinheit sich auf die vorläufig angenommene Ware beziehende Daten aufzunehmen und vermittels der Steuereinheit mit den im Datenspeicher abgespeicherten Daten zu vergleichen, um festzustellen, ob die vorläufig angenommene Ware der zu liefernden Ware entspricht, und dann im Bejahungsfall die vorläufig angenommene Ware durch wenigstens eine der folgenden Aktionen endgültig anzunehmen:
- die Ware wird von dem Warenaufnahmeraum in einen geschützten (gegebenenfalls inneren) Warenaufnahmebereich der Warenempfangsvorrichtung eingelassen,
- es wird akustisch oder/und optisch oder/und elektronisch oder/und durch Ausdruck einer Empfangsquittung die Annahme der Ware signalisiert,
- der Erhalt der Ware wird gemäß Merkmalsgruppe a5) an eine der Ware zugeordnete Datenkommunikationsadresse, gegebenenfalls an das Bestellungsbestätigungssystem, bestätigt.

Nach diesem Vorschlag geht der endgültigen Annahme der angelieferten Ware eine doppelte Überprüfung voraus, wobei es bevorzugt ist, dass wenigstens die zweite, nach der vorläufigen Annahme vor der endgültigen Annahme der Ware stattfindende Überprüfung rein maschinell beziehungsweise automatisiert ohne Zwischenschaltung einer menschlichen Person erfolgt, beispielsweise durch Aufnahme von durch Bar-Code codierten Daten mittels eines im Warenaufnahmeraum angeordneten Bar-Code-Lesers.

Die Erfindung betrifft nach einem zweiten Aspekt speziell auch ein Warenempfangssystem zum automatisierten Annehmen von beispielsweise auf eine Warenbestellung gelieferter Ware, umfassend eine Steuereinheit, einen Datenspeicher, eine Warenempfangsvorrichtung und eine Identifikationseinheit. Erfindungsgemäß ist vorgesehen, dass das Warenempfangssystem dafür ausgelegt ist:
a2) in Antwort auf eine Annahmeanforderung sich auf gelieferte Ware beziehende Daten unter Vermittlung der Identifikationseinheit aufzunehmen und vermittels der Steuereinheit mit zuvor im Datenspeicher abgespeicherten, wenigstens eine Warenlieferung identifizierenden Daten zu vergleichen,
a3) im Falle, dass keine Annahmeanforderung vorliegt, die Annahmekapazität der Warenempfangsvorrichtung erschöpft ist oder der Vergleich zwischen den aufgenommenen Daten und den abgespeicherten Daten ergibt, dass die Annahmeanforderung nicht zulässig ist, die Warenempfangsvorrichtung in einem Abweismodus zu halten oder in diesen zu versetzen, in dem dadurch keine Ware angenommen wird, dass ein Warenaufnahmeraum der Warenempfangsvorrichtung von einer Außenseite her unzugänglich bleibt, und
a4) im Falle, dass der Vergleich zwischen den aufgenommenen Daten und den abgespeicherten Daten ergibt, dass die Annahmeanforderung zulässig ist und die Annahmekapazität der Warenempfangsvorrichtung nicht erschöpft ist, die Warenempfangsvorrichtung in einen Annahmemodus zu versetzen, in dem die gelieferte Ware dadurch angenommen wird, dass die Ware von der Außenseite her in den Warenaufnahmeraum eingelassen wird.

Bevorzugt ist das System dafür ausgelegt, vermittels Datenkommunikation über seine Kommunikationseinheit sich auf eine anstehende Warenlieferung oder anstehende Warenlieferungen beziehende Daten automatisiert zu empfangen und in seinem Datenspeicher auf den empfangenden Daten beruhende Daten zu speichern, die die anstehende(n) Warenlieferung(en) identifizieren (Merkmalsgruppe a1)). Es sind aber auch andere Wege der Eingabe der die Warenlieferung(en) identifizierenden Daten denkbar, beispielsweise durch manuelle Eingabe mittels eines Bedienungstableaus oder dergleichen.

Das Warenempfangssystem kann damit ausgelegt sein, nach oder im Zuge der Annahme von Ware den Erhalt der Ware automatisiert vermittels Datenkommunikation über seine Kommunikationseinheit an eine der angenommenen Ware zugeordnete Datenkommunikationsadresse, gegebenenfalls an ein zugeordnetes Bestellungsbestätigungssystem, zu bestätigen (Merkmalsgruppe a5)).

Es ist häufig zweckmäßig, wenn das Warenempfangssystem als Warenbestellsystem dienen kann. Hierzu wird vorgeschlagen, dass das Warenempfangssystem dafür ausgelegt ist, dass vermittels Datenkommunikation mit einer auswählbaren oder fest zugeordneten Datenkommunikationsadresse Warenbestellungen aufgegeben werden können (Merkmalsgruppe a6)).

Im Hinblick auf die Sicherheit kann es sinnvoll sein, dass das System dafür ausgelegt ist, im Falle einer zulässigen Annahmeanorderung die betreffende Ware zuerst vorläufig dadurch anzunehmen, dass die Ware von der Außenseite her in den Warenaufnahmeraum eingelassen wird, dann unter Vermittlung der Identifikationseinheit sich auf die vorläufig angenommene Ware beziehende Daten aufzunehmen und vermittels der Steuereinheit mit den im Datenspeicher abgespeicherten Daten zu vergleichen, um festzustellen, ob die vorläufig angenommene Ware der zu liefernden Ware entspricht, und dann im Bejahungsfall die vorläufig angenommene Ware durch wenigstens eine der folgenden Aktionen endgültig anzunehmen:
- die Ware wird von dem Warenaufnahmeraum in einen geschützten (gegebenenfalls inneren) Warenaufnahmebereich der Warenempfangsvorrichtung eingelassen,
- es wird akustisch oder/und optisch oder/und elektronisch oder/und durch Ausdruck einer Empfangsquittung die Annahme der Ware signalisiert,
- der Erhalt der Ware wird gemäß Merkmalsgruppe a5) an eine der Ware zugeordnete Datenkommunikationsadresse, gegebenenfalls an ein zugeordnetes Bestellungsbestätigungssystem, bestätigt.

### Generell wird für ein/das Warenempfangssystem nach der Erfindung (erster und zweiter Aspekt) noch Folgendes vorgeschlagen:

Die Identifikationseinheit des Warenempfangssystems kann wenigstens eine optische Erfassungseinheit, gegebenenfalls einen Bar-Code-Leser, oder/und ein Lieferantenbedienertablau zur manuellen Eingabe von sich auf die gelieferte Ware beziehenden Daten oder/und eine vorzugsweise drahtlose elektronische Kommunikationsschnittstelle zur elektronischen Eingabe von sich auf die gelieferte Ware beziehenden Daten aufweisen.

Betreffend die Warenempfangsvorrichtung kann im Hinblick auf die Annahme von verderblicher Ware, beispielsweise Lebensmittel, vorgesehen sein, dass ein Kühlaggregat zur Kühlung von kühlungsbedürftiger oder Gefrierbedingungen bedürfender Ware vorgesehen ist. Das Kühlaggregat ist vorzugsweise automatisiert in Abhängigkeit von sich auf die angenommene Ware beziehenden oder die Warenlieferung identifizierenden Daten einschaltbar.

Es kann auch zweckmäßig sein, dass die Warenempfangsvorrichtung eine Sensoranordnung zum Erfassen einer Entnahme der angenommenen Ware aus dem Warenaufnahmeraum oder dem Warenaufnahmebereich aufweist, wobei das Warenempfangssystem in Antwort auf das Erfassen einer Warenentnahme automatisiert per Datenkommunikation eine die Warenentnahme angebende Mitteilung an eine vorgegebene oder vorgebbare, gegebenenfalls der entnommenen Ware zugeordnete Datenkommunikationsadresse, gegebenenfalls an ein zugeordnetes Bestellungsbestätigungssystem übermitteln kann. Ferner kann man vorsehen, dass das im Hinblick auf die betreffende Ware eingeschaltete Kühlaggregat in Folge der Entnahme dieser Ware automatisch ausgeschaltet wird.

Zu weiteren möglichen Ausgestaltungen der Warenempfangsvorrichtung wird auf die Ausführungen weiter unten verwiesen. Das System kann neben wenigstens einer Warenempfangsvorrichtung auch wenigstens eine, vorzugsweise eine Mehrzahl von hierauf abgestimmten Warentransportbehältern umfassen (vgl. die Ausführungen zum fünften Erfindungsaspekt).

Die Erfindung betrifft nach einem dritten Aspekt ferner ein Bestellungsbestätigungssystem zum automatisierten Bestätigen von Warenbestellungen unter automatisierter Übermittlung von sich auf die betreffende Ware beziehenden Daten, umfassend einen Datenspeicher und eine elektronische Kommunikationseinheit. Das erfindungsgemäße Bestellungsbestätigungssystem ist dafür ausgelegt:
b1) in Antwort auf dem Bestellbestätigungssystem eingegebene oder von diesem empfangene Daten, die sich auf wenigstens eine Warenbestellung beziehen und wenigstens einem vorgegebenen oder vorgebbaren Kriterium genügen, die Warenbestellung automatisiert dadurch zu bestätigen, dass es Daten, die sich auf wenigstens eine auf die Bestellung zu erfolgende Lieferung der bestellten Ware beziehen und die Lieferung identifizierende Daten umfassen, vermittels Datenkommunikation an eine der Warenbestellung zugeordnete Datenkommunikationsadresse über seine Kommunikationseinheit automatisiert übermittelt.

Erfindungsgemäß ist das Bestellungsbestätigungssystem nach diesem Aspekt ferner dafür ausgelegt, automatisiert eine Überprüfung auf Plausibilität und gegenseitige Konsistenz von einen bestellerseitigen Lieferterminwunsch angebenden Daten, von einen bestellerseitigen Liefermengenwunsch angebenden Daten und von eine Warenlieferfähigkeit angebenden Daten sowie gegebenenfalls von eine Annahmekapazität, die einer bestellerseitig definierten Lieferadresse zugeordnet ist, angebenden Daten, vorzugsweise unter Berücksichtigung von Daten, die terminlich schon festgelegte Warenlieferungen an diese Lieferadresse vorangehender Warenbestellungen angeben, durchzuführen und die gemäß Merkmalsgruppe b1) zu übermittelnden, die Lieferung identifizierenden Daten einschließlich den Liefertermin oder die Liefertermine angebenden Daten nur dann zu übermitteln, wenn die überprüften Daten plausibel und gegenseitig konsistent sind.

Wie im Zusammenhang mit dem ersten Aspekt der Erfindung schon angesprochen, kann das Bestellungsbestätigungssystem als Bestellungsannahmesystem dienen. Hierzu kann es dafür ausgelegt sein, vermittels Datenkommunikation über seine Kommunikationseinheit erfolgende Warenbestellungen automatisiert dadurch anzunehmen, dass es die Warenbestellung kennzeichnende Daten automatisiert in seinem Datenspeicher abspeichert oder per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Weiterbearbeitungssystem, übermittelt und die jeweils angenommene Warenbestellung automatisiert gemäß Merkmalsgruppe b1) bestätigt (Merkmalsgruppe b2a)).

In diesem Zusammenhang ist es zweckmäßig, wenn das Bestellungsbestätigungssystem dafür ausgelegt ist, für eine angenommene Warenbestellung die zu liefernde Ware, die Lieferadresse und die anstehende Warenlieferung oder anstehenden Warenlieferungen identifizierende Daten vermittels Datenkommunikation über seine Kommunikationseinheit automatisiert an wenigstens eine fest eingestellte oder einstellbare oder an wenigstens eine der bestellten Ware oder der Lieferadresse zugeordnete oder an wenigstens eine einer bestellerseitigen Auswahl entsprechende Datenkommunikationsadresse zu übermitteln (Merkmalsgruppe b3a)).

Eine andere, ebenfalls schon angesprochene Möglichkeit ist, dass das Bestellungsbestätigungssystem als Bestellungsweiterleitungssystem dient. Hierzu kann es dafür ausgelegt sein, vermittels Datenkommunikation über seine Kommunikationseinheit erfolgende Warenbestellungen automatisiert per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Bestellungsannahmesystem, zu übermitteln und in Antwort auf eine Bestellungsannahme signalisierende, per Datenkommunikation empfangene Daten die jeweils angenommene Warenbestellung automatisiert gemäß Merkmalsgruppe b1) zu bestätigen (Merkmalsgruppe b2b)).

Das eingangs genannte System nach dem eingangs genannten Aspekt der Erfindung sowie das Warenempfangssystem und das Bestellungsbestätigungssystem nach den weiteren Aspekten der Erfindung können jeweils auf Grundlage eines beziehungsweise mehrerer Mehrzweck-Computer, gewünschtenfalls eines Personal-Computers beziehungsweise eines Server-Computers, aufgebaut sein, vorzugsweise auf Grundlage eines Standards-Betriebssystems, je nach Betriebssystem nötigenfalls in Verbindung mit gesonderter Datenkommunikations-Software (etwa nach dem TCP/IP-Protokoll für Kommunikation über das Internet).

Die Kommunikationseinheit des Warenempfangssystems beziehungsweise die Kommunikationseinheit des Bestellungsbestätigungssystems kann einen Kommunikationsanschluss zum Anschluss des betreffenden Systems an einem Sprachkommunikationsnetz oder/und an einem Datenkommunikationsnetz oder/und an einem Computernetz aufweisen, über das die Datenkommunikation erfolgt. Im Rahmen der Erfindung ist es grundsätzlich völlig gleichgültig, auf welche Weise und über welche Kanäle beziehungsweise Medien die Datenkommunikation erfolgt. So ist es auch denkbar, unter Einsatz von Modems eine normale (analoge) Telefonverbindung zu verwenden. Man wird in der Regel aber eine Datenkommunikation über ISDN, Datex-P, das Internet oder dergleichen vorziehen. In Betracht kommt insbesondere, dass die Datenkommunikation über das Internet oder/und ein LAN oder/und ein WAN oder/und ein Intranet oder/und ein Exnet erfolgt. Die Datenkommunikation kann Übersendung von Daten per E-Mail oder/und Informationsübermittlung nach dem TCP/IP-Protokoll oder/und FTP-Protokoll umfassen.

Die Erfindung betrifft nach einem vierten Aspekt ferner eine Warenempfangsvorrichtung, gegebenenfalls (insbesondere) für ein Warenempfangssystem wie vorangehend beschrieben (es wird auf das einen Teil des Gesamtsystems nach dem ersten Erfindungsaspekt darstellende Warenempfangssystem sowie als das gegebenenfalls eigenständige Warenempfangssystem nach dem zweiten Erfindungsaspekt Bezug genommen). Für die Warenempfangsvorrichtung wird vorgeschlagen, dass diese umfasst:
- eine eine Warendurchlassöffnung begrenzende, einen Rahmen oder eine Wandung umfassende Begrenzung;
- eine relativ zur Begrenzung bewegbar angeordnete Verschlussanordung, die zwischen einer Öffnungstellung, in der die Warendurchlassöffnung offen ist, und einer Verschließstellung, in der die Warendurchlassöffnung verschlossen ist, bewegbar ist;
- eine zwischen der Begrenzung und der Verschlussanordnung angeordnete Antriebs- oder/und Verriegelungsanordnung, die dafür ausgelegt ist, wahlweise
   -- in einem ersten Modus die Verschlussanordnung in die Verschließstellung zu bringen oder/und in dieser zu halten und
   -- in einem zweiten Modus eine Verstellung der Verschlussanordnung in die Öffnungsstellung zuzulassen oder die Verschlussanordnung in die Öffnungsstellung zu bringen,
wobei der Antriebs- oder/und Verriegelungsanordung eine elektronische Schaltung zugeordnet ist, über die die Antriebs- oder/und Verriegelungsanordnung zwischen dem ersten und dem zweiten Modus umschaltbar ist in Abhängigkeit von wenigstens einem der elektronischen Schaltung zugeführten Signal.

Für den Fall, dass die Warenempfangsvorrichtung besonders kostengünstig sein soll oder/und wenig ansonsten nicht nutzbaren Raum einnehmen soll, oder im Falle, dass etwa in einer älteren Wohnanlage nachträglich eine Warenempfangsvorrichtung in Zuordnung zu einer Wohnung eingebaut werden soll und hierfür wenig Platz zur Verfügung steht, kann die Begrenzung samt der Verschlussanordnung und der Antriebs- oder/und Verriegelungsanordnung in eine auf den Rahmen abgestimmte Öffnung oder Aussparung in einer Wand, in einem Türflügel einer Tür, in einem Fensterflügel eines Fensters eingesetzt oder einsetzbar sein, um einen dahinter liegenden Raum oder Bereich als Warenaufnahmeraum oder Warenaufnahmebereich für vermittels der Warenempfangsvorrichtung angenommene Ware zu nutzen. Beispielsweise ist es denkbar, dass als Warenaufnahmeraum oder Warenaufnahmebereich der Flur einer Wohnung dient und die angelieferte Ware durch die im unteren Bereich der Wohnungstür vorgesehene, beispielsweise durch eine Klappe verschließbare Warendurchlassöffnung hineinschiebbar ist.

Insbesondere dann, wenn hinreichend Platz für die Warenempfangsvorrichtung zur Verfügung steht oder im Falle von Neubauten diese von vornherein mit Warenempfangsvorrichtungen ausgestattet werden, ist es zweckmäßig, wenn die Warenempfangsvorrichtung ein die Begrenzung aufweisendes Gehäuse umfasst, in dem wenigstens ein Warenaufnahmeraum vorgesehen ist, in den Ware von außen durch die Warendurchlassöffnung einführbar ist. Das Gehäuse kann wenigstens eine gegenüber der Warendurchlassöffnung gesonderte Warenentnahmeöffnung aufweisen.

Das Gehäuse kann in eine Aussparung oder Öffnung in einer Wand eingesetzt oder einsetzbar sein. Im Falle wenigstens einer gegenüber der Warendurchlassöffnung gesonderten Warenentnahmeöffnung ist in diesem Zusammenhang bevorzugt, dass die Warenentnahmeöffnung sich zu einem hinter der Wand liegenden Bereich öffnet, wohingegen die Warendurchlassöffnung sich zu einem vor der Wand liegenden Bereich öffnet. So kann die Ware von außen angeliefert und an die Warenempfangsvorrichtung übergeben werden und der Empfänger kann die Ware vom Wohnungsinneren her der Warenempfangsvorrichtung entnehmen.

Für den schon angesprochenen Aspekt besonders hoher Sicherheit gegen Missbrauch wird vorgeschlagen, dass in dem Gehäuse ein mittels einer weiteren Verschlussanordnung gegenüber dem Warenaufnahmeraum verschließbarer Warenaufnahmebereich vorgesehen ist, wobei die weitere Verschlussanordnung zwischen einer Öffnungsstellung, in der eine den Warenaufnahmebereich mit dem Warenaufnahmebereich verbindende Warendurchlassöffnung offen ist, und einer Verschließstellung, in der diese Warendurchlassöffnung verschlossen ist, bewegbar ist, wobei der weiteren Verschlussanordnung eine weitere Antriebs- oder/und Verriegelungsanordnung zugeordnet ist, die dafür ausgelegt ist, wahlweise
-- in einem ersten Modus die Verschlussanordnung in die Verschließstellung zu bringen oder/und in dieser zu halten und
-- in einem zweiten Modus eine Verstellung der Verschlussanordnung in die Öffnungsstellung zuzulassen oder die Verschlussanordnung in die Öffnungsstellung zu bringen,
und wobei der weiteren Antriebs- oder/und Verriegelungsanordung eine elektronische Schaltung zugeordnet ist, über die die Antriebs- oder/und Verriegelungsanordnung zwischen dem ersten und dem zweiten Modus umschaltbar ist in Abhängigkeit von wenigstens einem der elektronischen Schaltung zugeführten Signal.

Diese Ausgestaltung der Warenempfangsvorrichtung kann dafür ausgenutzt werden, die angelieferte Ware zuerst vorläufig und erst nach weiterer Überprüfung endgültig anzunehmen.

Der Warenaufnahmeraum oder/und der Warenaufnahmebereich kann eine Lageranordnung mit mehreren Warenlagerplätzen und einer vorzugsweise motorisch angetriebenen Fördereinrichtung zum Fördern von Ware zu einem jeweiligen Lagerplatz aufweisen. Hierzu kann die Fördereinrichtung wenigstens eine vertikal oder/und horizontal verfahrbare Förderplattform umfassen.

Die Warenempfangsvorrichtung kann eine Mehrzahl von Empfangseinheiten aufweisen, die jeweils mindestens einen Warenaufnahmeraum mit einer dieser zugeordneten, zum Verschließen einer jeweiligen Warendurchlassöffnung dienenden Verschlussanordnung sowie gewünschtenfalls einen Warenaufnahmebereich umfassen. Die Empfangseinheiten können auch jeweils als eigenständige Warenempfangsvorrichtung (beispielsweise entsprechend der vorangehenden Beschreibung) ausgeführt sein, die nebeneinander oder/und aufeinander angeordnet sind und zusammen eine Gesamt-Warenempfangsvorrichtung bilden.

Wenigstens einige der Empfangseinheiten können verschiedenen Warenempfangssystemen zugeordnet sein. Für eine besonders hohe Flexibilität kann auch vorgesehen sein, dass die Zuordnung der Warenempfangsvorrichtungen zu einem beziehungsweise zu verschiedenen Warenempfangssystemen geändert werden kann, diese also bedarfsweise verschiedenen Empfangssystemen zugeordnet werden können. Eine solche einstellbare/ wählbare Zuordnung ist insbesondere zweckmäßig im Falle von vergleichsweise viele Wohnungen aufweisenden Mehrfamilienhäusern, bei denen es in der Regel nicht notwendig ist, ständig für jede Wohnung eine jeweilige Warenempfangsvorrichtung bereitzuhalten. Man kann gewissermaßen einen Pool von Warenempfangsvorrichtungen oder Warenempfangseinheiten bereithalten, auf die die verschiedenen Parteien bedarfsweise zugreifen und eine jeweilige einem jeweiligen Besteller beziehungsweise einer jeweiligen Warenlieferung zuordnen.

Es wurde schon angesprochen, dass es im Falle von verderblicher Ware häufig sinnvoll ist, eine Kühlung der angenommenen Ware vorzusehen. Hierfür kann die Warenempfangsvorrichtung mit wenigstens einem bedarfsweise an- und ausschaltbarem Kühlaggregat ausgestattet sein, gewünschtenfalls mit mehreren, verschiedenen Empfangseinheiten zugeordneten Kühlaggregaten.

Die Erfindung betrifft nach einem fünften Aspekt ferner eine Kombination aus wenigstens einer Warenempfangsvorrichtung wie vorangehend beschrieben und wenigstens einem, vorzugsweise einer Mehrzahl von Warentransportbehältern, die abmessungsmäßig auf die Warenempfangsvorrichtung abgestimmt sind und in deren Warenaufnahmeraum beziehungsweise deren Warenaufnahmebereich aufgenommen werden können. Es ist nämlich häufig zweckmäßig, dass die bestellte Ware in einem in einem Warentransportbehälter aufgenommenen Zustand angeliefert und samt dem Warentransportbehälter an die Warenempfangsvorrichtung übergeben wird. Hierdurch wird die Handhabung der Ware und der Warentransport wesentlich erleichtert. Es ist auch möglich, dass in einem angelieferten Warentransportbehälter Ware aus verschiedenen Bestellungen zusammengeführt ist.

Die Erfindung betrifft nach einem sechsten Aspekt ferner ein Verfahren zum Bestätigen von Warenbestellungen und zum Annehmen von auf die Warenbestellungen gelieferte Ware. Es wird vorgeschlagen, dass das Verfahren die Schritte umfasst:
a1) Empfangen, vermittels Datenkommunikation, von sich auf eine anstehende Warenlieferung oder anstehende Warenlieferungen beziehenden Daten und Abspeichern von auf den empfangenden Daten beruhenden Daten, die die anstehende(n) Warenlieferung(en) identifizieren,
a2) in Antwort auf eine Annahmeanforderung: Aufnehmen von sich auf gelieferte Ware beziehenden Daten und Vergleichen dieser Daten mit den abgespeicherten Daten,
a3) im Falle, dass keine Annahmeanforderung vorliegt, eine Warenannahmekapazität erschöpft ist oder der Vergleich zwischen den aufgenommenen Daten und den abgespeicherten Daten ergibt, dass die Annahmeanforderung nicht zulässig ist: Halten eines Warenaufnahmeraums in einem von einer Außenseite her unzugänglichen Zustand,
a4) im Falle, dass der Vergleich zwischen den aufgenommenen Daten und den abgespeicherten Daten ergibt, dass die Annahmeanforderung zulässig ist und die Warenannahmekapazität nicht erschöpft ist: Versetzen des Warenaufnahmeraums in einen von der Außenseite her zugänglichen Zustand.

Das Verfahren wird bevorzugt in Verbindung mit einem System wie vorangehend beschrieben angewendet, das das Verfahren ausführt. Für das Verfahren werden dementsprechend den in der vorstehenden Beschreibung behandelten Vorrichtungsmerkmalen entsprechende beziehungsweise korrespondierende Verfahrensmerkmale vorgeschlagen.

Erwähnt werden sollte noch, dass der hier verwendete Begriff "Ware" hier so verstanden wird, dass dieser nicht nach Einzahl oder Mehrzahl unterscheidet. Wenn von angelieferter "Ware" gesprochen wird, meint dies sowohl den Fall, dass ein Gegenstand, beispielsweise eine Milchtüte oder eine Packung Reis oder ein Buch angeliefert wird, als auch den Fall, dass gleichzeitig verschiedene Gegenstände angeliefert werden, beispielsweise eine oder mehrere Milchtüten, eine oder mehrere Packungen Reis, Obst, Gemüse und irgendwelche Haushaltsgegenstände. Anstelle des Worts "Ware" kann somit stets auch das Wort "Waren" gelesen werden.

Es sollte noch darauf hingewiesen werden, dass die Datenkommunikation zwischen den verschiedenen Bestandteilen des Gesamtsystems leitungsgebunden (z. B. über das Telefonnetz, per ISDN oder DSL) oder drahtlos (etwa über ein Mobilfunknetz, gegebenenfalls nach neuester Technologie [Stichworte: WAP, EGPRS]) erfolgen kann.

Die Erfindung wird im Folgenden anhand von in den Figuren gezeigten Ausführungsbeispielen näher erläutert.
- Fig. 1: zeigt ein Ausführungsbeispiel eines erfindungsgemäßen Systems zum automatisierten Bestätigen von Warenbestellungen und zum automatisierten Annehmen von auf die Warenbestellungen gelieferter Ware, das ein bestellerseitiges oder empfängerseitiges Warenempfangssystem und ein lieferantenseitiges oder anbieterseitiges Bestellungsbestätigungssystem umfasst, die an einem Computernetzwerk angeschlossen sind, um eine Datenkommunikation zwischen den beiden Teil-Systemen zu ermöglichen.
- Fig. 2: zeigt das System der Fig. 1 in Kombination mit einem weiteren System, das über das Computernetzwerk mit dem Bestellungsbestätigungssystem in Datenkommunikationsverbindung steht und mit diesem bei der Bearbeitung von Bestellungen kooperiert.
- Fig. 3: zeigt schematisch einen möglichen Aufbau eines erfindungsgemäßen Warenempfangssystems auf Grundlage eines universellen Computers, gegebenenfalls Personal-Computers, und einer diesem zugeordneten Warenempfangsvorrichtung.
- Fig. 4: zeigt schematisch einen möglichen Aufbau des als Steuereinheit dienenden universellen Computers des Systems der Fig. 3 hinsichtlich möglicher Hardware- und Software-Komponenten.
- Fig. 5: zeigt in Fig. 5a ein schematisches Informations- und Warenflussdiagramm gemäß einer möglichen Ausgestaltungsform der Erfindung und in Fig. 5b eine mögliche Ausführungsvariante.
- Fig. 6: zeigt eine Vorderansicht auf eine in eine Wand eingebaute Warenempfangsvorrichtung mit Sicht auf eine Warenannahmeklappe und ein Bedienertableau (Sichtrichtung VI in Fig. 7).
- Fig. 7: zeigt einen Schnitt durch die Warenempfangsvorrichtung gemäß Schnitt VII-VII in Fig. 6.
- Fig. 8: zeigt einen Schnitt durch die Warenempfangsvorrichtung gemäß Schnitt VIII-VIII in Fig. 7.
- Fig. 9: zeigt einen Schnitt durch die Warenempfangsvorrichtung gemäß Schnitt IX-IX in Fig. 7.
- Fig. 10: zeigt eine Draufsicht auf die Warenempfangsvorrichtung gemäß Sichtrichtung X in Fig. 7.

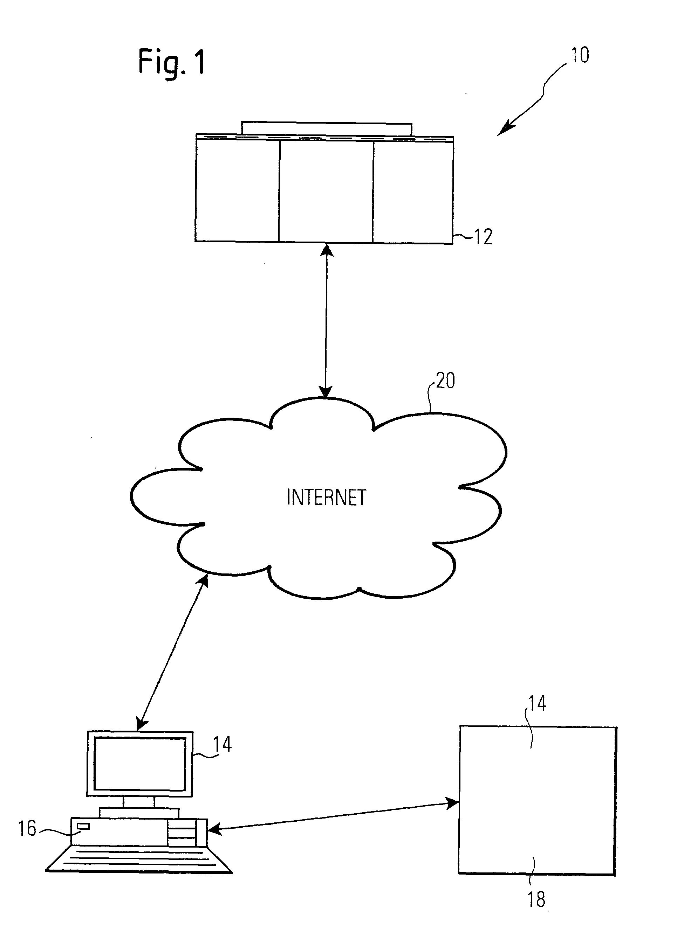

Fig. 1 zeigt ein Ausführungsbeispiel eines erfindungsgemäßen Systems 10 zum automatisierten Bestätigen von Warenbestellungen und zum automatisierten Annehmen von auf die Warenbestellungen gelieferter Ware. Das hier auch als Gesamtsystem bezeichnete System 10 umfasst wenigstens ein als Bestellungsbestätigungssystem 12 dienendes Server-Computersystem und wenigstens ein Warenempfangssystem 14. Das Warenempfangssystem 14 umfasst einen als Steuereinheit des Warenempfangssystems 14 dienenden Personal-Computer 16 und eine daran angeschlossene Warenempfangsvorrichtung 18. Das Server-Computersystem 12 und der Personal-Computer 16 sind an einem Computernetz 20 angeschlossen, im Falle des Ausführungsbeispiels der Fig. 1 am Internet.

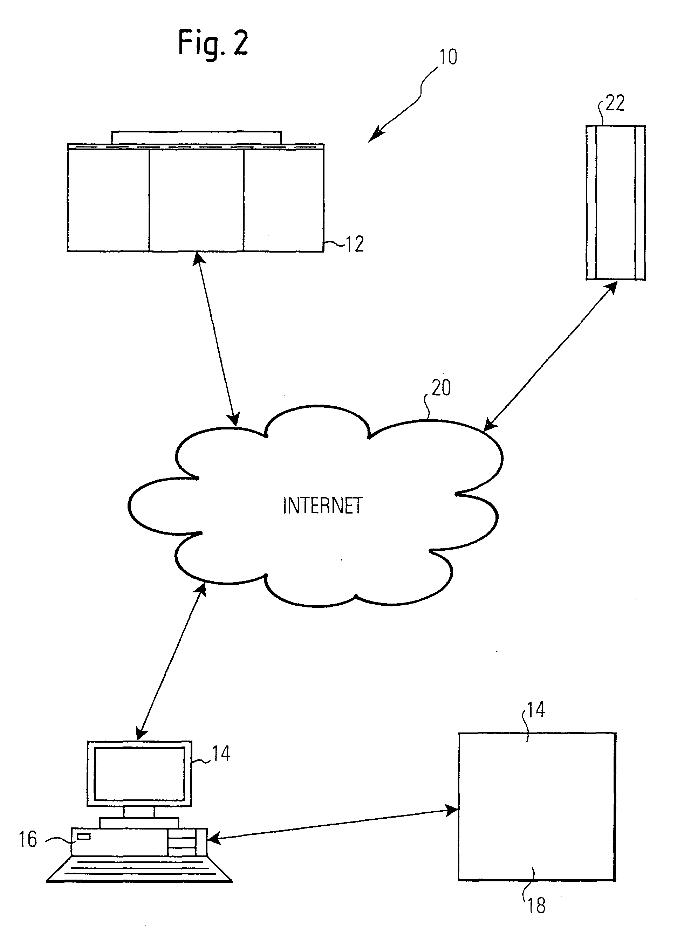

Mittels des Warenempfangssystems 14, speziell mittels des Personal-Computers 16 können beispielsweise unter Verwendung eines normalen Internet-Browsers Warenbestellungen aufgegeben werden, indem zwischen dem Personal-Computer 16 und dem Server-Computersystem 12 eine Datenkommunikationsverbindung über das Internet 20 aufgebaut wird. Beispielsweise kann das Server-Computersystem eine oder mehrere Internet-Seiten mit Warenauswahl- und Warenbestellfunktionalitäten bereithalten, auf die man mittels des Personal-Computers 16 zugreifen kann. Das Server-Computersystem kann alle Funktionalitäten für die Annahme und die buchungstechnisch und verwaltungstechnisch weitere Bearbeitung einer jeweiligen Bestellung bereitstellen und die Bestellung annehmen und auf noch zu beschreibende Art und Weise bestätigen. Eine solche Konstellation kann beispielsweise dann vorgesehen sein, wenn das Server-Computersystem von einem Anbieter unterhalten wird, der selbst als Anbieter von Waren in Erscheinung tritt und nach Annahme einer Bestellung für die Erfüllung der Bestellung verantwortlich ist. Für die Erfüllung der Bestellungen, also für die Auslieferung der bestellten Ware, kann der Anbieter aber auch Subunternehmen, beispielsweise Lieferanten oder Produzenten der betreffenden Ware einschalten und nach Annahme der Bestellung entsprechende Daten an ein Computersystem eines jeweiligen Subunternehmers übermitteln. Ein entsprechendes, über das Internet 20 mit dem Server-Computersystem 12 in Datenkommunikationsverbindung stehendes Computersystem 22 ist in Fig. 2 gezeigt. Das Computersystem 22 kann selbstverständlich auch dem die Internet-Seite bereithaltenden Anbieter zugeordnet sein und über ein unternehmensinternes Computernetz mit dem Server-Computersystem in Datenkommunikationsverbindung stehen.

Fig. 2 kann auch zur Veranschaulichung einer weiteren möglichen Konstellation dienen. Es könnte sein, dass der die zur Bestellung von Waren angewählten Internet-Seiten bereithaltende Anbieter nur als Vermittler auftritt und Bestellungen per Datenkommunikation an andere Anbieter weiterleitet. Das Computersystem 22 könnte das Computersystem eines solchen, nach Annahme der Bestellung für die Lieferung verantwortlichen weiteren Anbieters sein. Die Entscheidung über die Annahme einer Bestellung wird dann auf Seiten dieses weiteren Anbieters, beispielsweise durch entsprechende Software-Funktionalitäten des Computersystems 22, fallen.

Diese Annahme der Bestellung wird dann unter Vermittlung des Server-Computersystems 12 an den Besteller, hier den Personal-Computer 16, per Datenkommunikation übermittelt.

Unabhängig von der Konstellation im Einzelnen hat das Bestellungsbestätigungssystem 12 die spezielle Aufgabe, eine jeweilige, beispielsweise durch eine Software-Funktionalität des Server-Computersystems 12 oder eine Software-Funktionalität des Computersystems 22 angenommene Bestellung per Datenkommunikation mit dem Besteller, im vorliegenden Fall mit dem Personal-Computer 16, zu bestätigen, wobei der Begriff "Bestätigen" hier eine spezielle Bedeutung hat. Die Bestätigung erfolgt bei den Systemen der Fig. 1 und 2 auf die Weise, dass an den Personal-Computer 16 automatisiert Daten per Datenkommunikation über das Computer-Netzwerk 20 übermittelt werden, die eine anstehende Warenlieferung identifizieren. Hierzu umfassen die an den Personal-Computer 16 übermittelten Daten beispielsweise einen eindeutigen Liefercode. Ferner können die übermittelten Daten den Liefertermin und eine der Lieferung zugeordnete Datenkommunikationsadresse, gegebenenfalls Telefonnummer, umfassen, an die die Annahme einer Lieferung automatisiert zu bestätigen ist.

Die Übermittlung der die anstehende Lieferung identifizierenden Daten ermöglicht, dass mittels der Warenempfangsvorrichtung 18 nur solche Waren automatisiert angenommen werden, die zuvor angekündigt und tatsächlich bestellt wurden. Hierzu kann bei einem Lieferversuch, beispielsweise auf eine mittels entsprechender Bedienungselemente gegebene Annahmeaufforderung, ein Liefercode der angelieferten Ware mittels einer Identifikationseinheit (beispielsweise umfassend einen Bar-Code-Leser) erfasst werden, der mit dem auf die Bestellung übermittelten Liefercode verglichen wird. Beispielsweise kann vorgesehen sein, dass der bei der Warenanlieferung mittels der Identifikationseinheit erfasste Liefercode identisch zum per Datenkommunikation übermittelten Liefercode sein muss. Eine andere Möglichkeit ist, dass die beiden Liefercodes auf andere Weise in einem bestimmten Verhältnis zueinander stehen müssen, um eine zulässige Warenlieferung zu bejahen. Der Vergleich der Liefercodes erfolgt vorzugsweise durch entsprechende Software-Funktionalitäten des Personal-Computers 16.

Ergibt der Vergleich, dass die Warenlieferung angekündigt und damit zulässig ist ("zulässige Annahmeanforderung"), so nimmt die Warenempfangsvorrichtung 18 die angelieferte Ware, beispielsweise eine die Ware enthaltende Lieferkiste, dadurch an, dass sich eine Klappe oder dergleichen der Warenempfangsvorrichtung öffnet oder öffnen lässt und die Ware, gegebenenfalls die Lieferkiste, in einen Warenaufnahmeraum eingeführt werden kann.

Stimmt der Liefercode nicht, so wird die Warenempfangsvorrichtung 18 die Ware nicht annehmen. Im Beispielsfall heißt dies, dass sich die Klappe nicht öffnet beziehungsweise sich nicht öffnen lässt.

Es kann vorgesehen sein, dass im Falle einer beschränkten Annahmekapazität der Warenempfangsvorrichtung diese nur dann Ware annimmt, wenn noch Aufnahmekapazität für Ware, gegebenenfalls für die Lieferkiste, besteht.

Um zu vermeiden, dass an einem gegebenen Liefertermin die Annahmekapazität für die an sich zulässigen Warenlieferungen nicht ausreicht, kann das Server-Computersystem 12 eine Software-Funktionalität aufweisen, die eine gegenseitige Abstimmung der Annahmekapazität der Warenempfangsvorrichtung 18 einerseits und der zu einem Termin zu liefernden Ware hinsichtlich Zahl und benötigtem Platz andererseits ermöglicht. Vorzugsweise werden bei diese Abstimmung auch die auf vorangehende Bestellungen erfolgenden Warenlieferungen berücksichtigt. Wenn dem Warenempfangssystem 14 nur ein bestimmtes Server-Computersystem 12 als Bestellungsbestätigungssystem zugeordnet ist, können die entsprechenden Daten über schon bestätigte Bestellungen und damit schon festgelegte Warenlieferungen auf Seiten des Server-Computersystems bereitgehalten werden. Ist hingegen vorgesehen, dass das Warenempfangssystem 14 wahlweise mit verschiedenen Bestellungsbestätigungssystemen, beispielsweise unterschiedlicher Anbieter zusammenwirkt, können die für die Abstimmung benötigten Daten auch auf Seiten des Warenempfangssystems 14 bereitgehalten werden und zusammen mit einem Bestellwunsch an das Bestellungsbestätigungssystem 12 per Datenkommunikation übermittelt werden. Neben dem bestellerseitigen Lieferterminwunsch und dem bestellerseitigen Liefermengenwunsch sowie der Warenannahmekapazität der Warenempfangsvorrichtung 18 müssen häufig auch eine Warenlieferfähigkeit des betreffenden Anbieters beziehungsweise eines über diesen oder durch diesen eingeschalteten Lieferanten sowie Randbedingungen betreffend die Auslieferung der Waren als solche (Entfernung zwischen Auslieferlager und Lieferadresse, Lieferroute und dergleichen) berücksichtigt werden. Aus diesem Grund ist es sinnvoll, den genannten Abgleich von Daten auf Seiten des Server-Computersystems 12 durchzuführen. Ginge es nur um die Annahmekapazität der Warenempfangsvorrichtung 18, so könnte eine entsprechende Überprüfung der Bestelldaten besonders zweckmäßig auf Seiten des als Warenbestellsystem dienenden Personal-Computers 16 erfolgen.

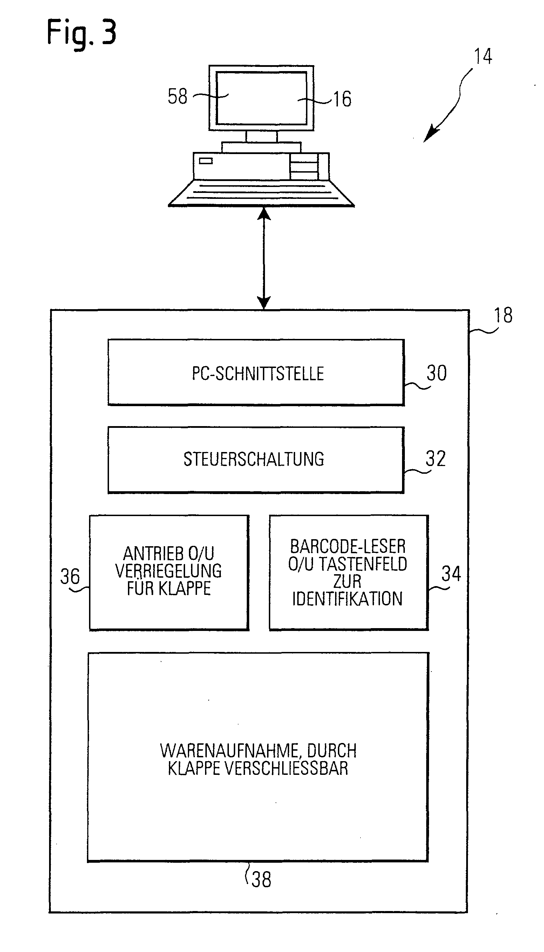

Ein möglicher Aufbau des Warenempfangssystems 14, speziell der Warenempfangsvorrichtung 18, ist in Fig. 3 schematisch gezeigt. Die Warenempfangsvorrichtung 18 weist eine PC-Schnittstelle 30 auf, über die die Warenempfangsvorrichtung 18 an einer zugeordneten Schnittstelle des Personal-Computers 16 angeschlossen ist. Über diese Schnittstellen erfolgt eine Datenkommunikation zwischen dem Personal Computer 16 und einer Steuerschaltung 32 der Warenempfangsvorrichtung 18. Die Steuerschaltung empfängt von einem Bar-Code-Leser oder/und von einem manuell bedienbaren Tastenfeld (allgemein: von einer Identifikationseinheit 34) Daten betreffend eine jeweilige Warenanlieferung, im Beispielsfall den Liefercode. Die betreffenden Daten werden über die Schnittstelle an den Personal-Computer 16 übermittelt, der die Daten mit den auf die Bestellung empfangenen Daten vergleicht und die Warenannahmeanforderung, also den Warenanlieferversuch auf Zulässigkeit überprüft. Ist die Warenannahmeanforderung zulässig, so wird über die Schnittstellen und die Steuerschaltung 32 ein Antrieb oder/und eine Verriegelung 36 für eine Verschließanordnung, beispielsweise eine Klappe, angesteuert, um die Verschließanordnung motorisch zu öffnen oder ein manuelles Öffnen der Verschließanordnung zuzulassen, so dass die Ware, gegebenenfalls die die Ware enthaltende Lieferkiste, in eine Warenaufnahme eingeführt werden kann.

Wenn die Warenannahmeaufforderung unzulässig ist (d. h. im Beispielsfall, dass der mittels der Identifikationseinheit 34 aufgenommene Liefercode mit dem auf die Bestellung vom Bestellungsbestätigungssystem 12 empfangenen Liefercode nicht zusammen passt, bleibt die Warenaufnahme 38 geschlossen. Einem Missbrauch der Warenempfangsvorrichtung 18 wird auf diese Weise wirkungsvoll entgegengewirkt.

Es sollte noch erwähnt werden, dass es auch möglich ist, die Überprüfung der Warenannahmeanforderung von Seiten der Warenempfangsvorrichtung 18 durch die Steuerschaltung 32 durchzuführen, die für diesen Zweck einen entsprechenden Datenspeicher und entsprechende Software- oder/und Hardwarefunktionalitäten aufweisen muss und dann besser als Steuereinheit anzusprechen ist. Der Personal-Computer 16 könnte beispielsweise nur für die Bestellung von Waren und für den Empfang der bei der Bestätigung der Bestellung übermittelten Daten eingesetzt werden. Grundsätzlich ist es auch möglich, die zukünftige Lieferungen indentifizierenden Daten auf andere Weise der Warenempfangsvorrichtung 18 einzugeben, beispielsweise auch manuell mittels eines entsprechenden Tastenfeldes. Im Falle einer derartigen Ausgestaltung ist die Systemkomponente 18 als Warenempfangssystem zu identifizieren, dass eine Steuereinheit (die Steuerschaltung 32) einen zugeordneten Datenspeicher, eine Warenempfangsvorrichtung (Antrieb oder/und Verriegelung, Klappe und Warenaufnahme) und eine Identifikationseinheit (Bar-Code-Leser oder/und Tastenfeld) aufweist.

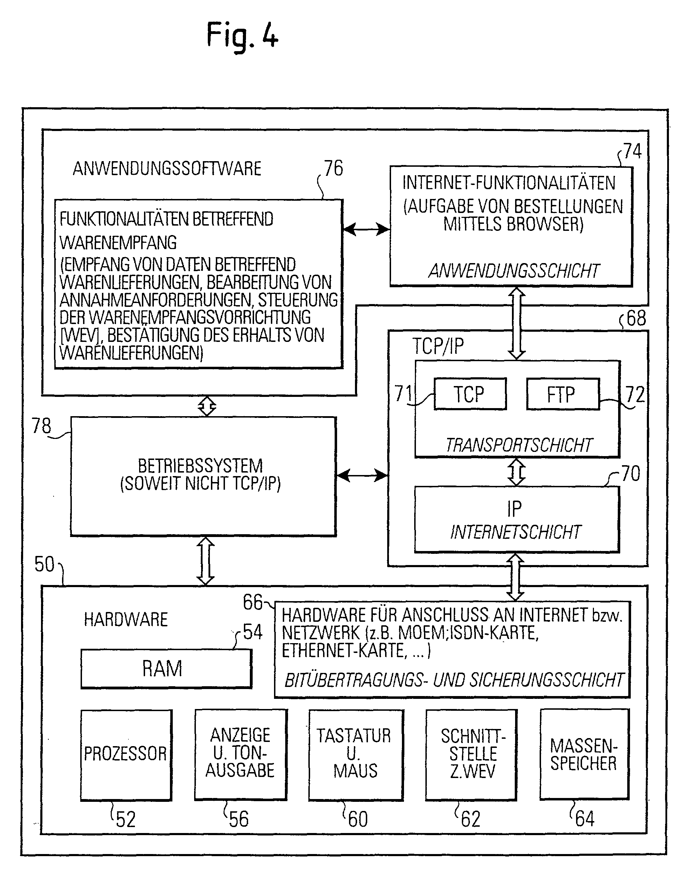

Im Folgenden wird aber davon ausgegangen, dass als Steuereinheit des Warenempfangssystems ein Mehrzweck-Computer, beispielsweise in Form des Personal-Computers 16 der Fig. 1 bis 3 eingesetzt wird. Ein möglicher hardwaremäßiger und softwaremäßiger Aufbau einer solchen Steuereinheit auf Grundlage eines Mehrzweck-Computers ist in Fig. 4 schematisch in einem Blockdiagramm dargestellt, das wesentliche Hardware-Komponenten und Software-Komponenten der Steuereinheit als Blöcke zeigt. Als Betriebssystem wird vorzugsweise ein Standard-Betriebssystem wie etwa WINDOWS 95, WINDOWS 98, WINDOWS NT, WINDOWS 2000, UNIX, LINUX oder MAC OS, eingesetzt.

Die Hardware 50 kann einem üblichen Personal-Computer etwa nach dem sogenannten "Industriestandard" mit Intel-Prozessoren entsprechen. Es ist ein Prozessor 52 (etwa ein Intel-Prozessor aus der Pentium-Serie), Direkt-Zugriffspeicher (RAM) 54, eine Anzeige- und Tonausgabe 56 (beispielsweise umfassend einen Bildschirm 58, Fig. 3), eine Eingabeanordnung 60 (beispielsweise in Form einer Tastatur und einer Maus), die schon angesprochene Schnittstelle 62 zur Warenempfangsvorrichtung 18 und ein Massenspeicher 64 (in Form etwa einer Festplatte oder/und eines optischen Speicherlaufwerks) vorgesehen. Ferner könnte auf Grundlage der üblicher Timer-Hardware des Computers eine Zeitangabeanordnung (nicht dargestellt) vorgesehen sein. Des Weiteren ist Hardware 66 zum Anschluss an einem Computernetzwerk, insbesondere dem Internet, vorgesehen. Die Hardware 66 zum Anschluss am Computernetzwerk (z. B. ein Modem, eine ISDN-Karte, eine ETHERNET-Karte oder dergleichen) kann in einem Schichtenmodell der Datenkommunikation in Computernetzen der sog. "Bit-Über-tragungs- und -Sicherungsschicht" zugeordnet werden. Es wird hierzu auf das OSI-Schichtenmodell und das TCP/IP-Schichtenmodell Bezug genommen.

Auf der Netzkommunikations-Hardware 66 bauen für eine Datenkommunikation über das Internet (beziehungsweise ein Ethernet oder Intranet) Software-Funktionalitäten 68 nach dem TCP/IP-Protokoll auf, umfassend das einer sogenannten "Internet-Schicht" entsprechende, Hardware-nähere IP-Protokoll (Internet-Protokoll) 70 sowie hierauf aufsetzende, einer sogenannten "Transport-Schicht" zugeordnete weitere Protokolle, etwa das TCP-Protokoll (transmission control protocol) 71 und das zum Austausch von Dateien zwischen Computern dienende FTP-Protokoll (file transfer protocol) 72.

Auf den TCP/IP-Software-Funktionalitäten setzen dann Computer-Netzwerk-Funktionalitäten, im Beispielsfall Internet-Funktionalitäten, aufAnwendungsebene auf, die einer sogenannten Anwendungsschicht zugeordnet werden können und in Fig. 4 durch Block 74 bezeichnet sind. Es kann sich etwa um die Funktionalitäten eines sogenannten Browsers handeln, die die Aufgabe von Bestellungen am oder über das Bestellungsbestätigungssystem 12 ermöglichen.

Die Computer-Netzwerk- beziehungsweise Internet-Funktionalitäten 74 stellen nur einen Teil der softwaremäßigen Funktionalitäten auf Anwendungsebene des Warenempfangssystems 14 dar. Weitere Funktionalitäten sind Funktionalitäten 76, die im Zusammenspiel mit dem Betriebssystem 78 weitere Funktionen des Warenempfangssystems 14 bereitstellen, insbesondere Funktionen betreffend den Warenempfang beziehungsweise zur Vorbereitung des Empfangs von Waren. So werden die auf eine Warenbestellung empfangenen, anstehende Warenlieferungen identifizierenden Daten empfangen und im Massenspeicher 64 in geeigneter Weise abgespeichert. Ferner werden über die Schnittstellen von der Warenempfangsvorrichtung 18 an die Steuereinheit 16 übermittelte Annahmeanforderungen bearbeitet und die von der Identifikationseinheit 34 aufgenommenen Daten mit den im Massenspeicher 64 abgespeicherten Daten verglichen. Ferner können die zur Steuerung der Warenempfangsvorrichtung dienenden Funktionalitäten auf Anwendungsebene angesiedelt sein. Gleiches gilt für die gegebenenfalls vorgesehene Bestätigung des Erhalts von Warenlieferungen nach erfolgreicher Annahme.

Das Bestellungsbestätigungssystem 12 kann in ähnlicher, dem Blockdiagramm der Fig. 4 entsprechender Weise aufgebaut sein. Grundsätzliche Unterschiede brauchen nur auf Anwendungsebene, also im Bereich der Anwendungs-Software, bestehen, die die erwähnten Funktionalitäten hinsichtlich der Annahme beziehungsweise Weiterleitung und hinsichtlich der Bestätigung von Bestellungen und den Abgleich von Lieferwunsch, Liefertermin, Lieferfähigkeit und Annahmekapazität bereitstellen. In der Regel wird man für ein Serversystem eine gegenüber einem Personal-Computer leistungsfähigere Hardware einsetzen.

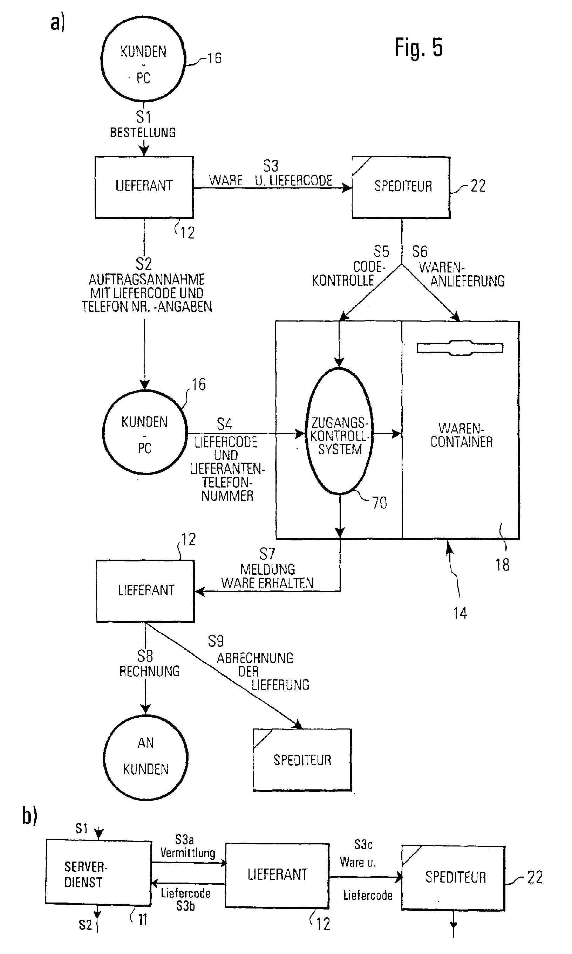

Ein Beispiel der Verwendung einer Ausführungsform eines erfindungsgemäßen Bestellungsbestätigungssystems 12 und einer Ausführungsform eines erfindungsgemäßen Warenempfangssystems 14 ist in Fig. 5a veranschaulicht. In einem Schritt S1 wird vermittels des Personal-Computers 16 des Kunden beziehungsweise Bestellers eine Bestellung beim Bestellungsbestätigungssystem 12 eines Anbieters oder Lieferanten aufgegeben. Kann der Lieferant liefern, so bestätigt das Bestellungsbestätigungssystem 12 in einem Schritt S2 die Bestellung, nimmt also den Auftrag an, indem per Datenkommunikation dem Kunden-Personal-Computer 16 die Auftragsannahme signalisiert und ein Liefercode und eine Datenkommunikationsadresse oder Telefonnummer übermittelt werden. In einem vorzugsweise in engem zeitlichen Zusammenhang mit dem Schritt S2 durchgeführten Schritt S3 werden Angaben zur bestellten und somit auszuliefernden Ware einschließlich des Liefercodes an ein Computersystem 22 eines Lieferdienstes oder Spediteurs übermittelt.

Beim hier gezeigten Ausführungsbeispiel ist davon ausgegangen, dass der Personal-Computer nur zur Aufgabe von Bestellungen und zum Empfang von die Bestellung bestätigenden und die hierauf erfolgende Warenlieferung beziehungsweise Warenlieferungen identifizierenden Daten dient. Die empfangenen Daten werde in einem Schritt S4 an das Warenempfangssystem 14 übertragen, und zwar an ein Zugangskontrollsystem 70 des Warenempfangssystems 14. Das Zugangskontrollsystem 70 weist eine Steuereinheit, einen Datenspeicher für die vom Personal-Computer 16 empfangenen Daten, eine elektronische Kommunikationseinheit und eine Identifikationseinheit auf und steuert die auch als Warencontainer bezeichenbare Warenempfangsvorrichtung 18.

Wenn die bestellte Ware vom Spediteur oder Lieferdienst ausgeliefert wird, erfasst das Zugangskontrollsystem (beispielsweise auf eine elektronisch oder durch Drücken eines Knopfes übermittelte Annahmeanforderung) mittels seiner Identifikationseinheit einen sich auf die angelieferte Ware beziehenden Liefercode, der mit dem vom Personal-Computer 16 empfangenen, intern abgespeicherten Liefercode verglichen wird. Stimmen die Codes überein oder stehen die Codes in einer vorbestimmten Beziehung zueinander, so entscheidet das Zugangskontrollsystem 70, dass es sich um eine zulässige Warenanlieferung handelt und versetzt die Warenempfangsvorrichtung 18 in einen Annahmemodus, so dass in einem Schritt S6 die Ware in die Warenempfangsvorrichtung 18 eingeführt beziehungsweise eingeschleust werden kann. Nach erfolgreicher Annahme der Ware durch die Warenempfangsvorrichtung 18 bestätigt das Zugangskontrollsystem 70 per Datenkommunikation an die vom Personal-Computer im Schritt S4 empfangene Datenkommunikationsadresse beziehungsweise Telefonnummer den Erhalt der Ware (Schritt S7). Im Beispielsfall handelt es sich bei der Datenkommunikationsadresse um die Adresse des Bestellungsbestätigungssystems 12. Auf diese Meldung hin wird vom Bestellungsbestätigungssystem in einem Schritt S8 eine Rechnung an den Kunden erstellt und im Schritt S9 mit dem Spediteur oder Lieferservice abgerechnet. Von den in Fig. 5 dargestellten Vorgängen können alle bis auf die Anlieferung der Ware im Schritt S6 automatisiert, ohne Einschaltung eines Menschen erfolgen. Auch die Erfassung des Liefercodes im Schritt S5 kann vollautomatisch erfolgen, ohne dass der Lieferbote tätig werden muss. Die Bestellung gemäß Schritt S1 wird in der Regel von einer menschlichen Person, dem Kunden, unter Verwendung des Personal-Computers 16 aufgegeben werden. Es ist aber auch denkbar, dass der Personal-Computer 16 die Bestellung vollautomatisiert entsprechend dem Personal-Computer zuvor eingegebenen Daten aufgibt. Fig. 5b veranschaulicht eine Ausführungsvariante, bei der zwischen Kunde und Lieferant ein vermittelnder Dienstleister beziehungsweise ein vermittelndes Dienstleistungs-System ("Serverdienst") geschaltet ist, dessen Funktion und Aufgaben weiter unten näher erläutert werden. Anstelle des Schritts S3 treten gemäß der Ausführungsvariante die Schritte S3a, S3b und S3c.

Fig. 5 kann auch als Darstellung eines Geschäftsmodells verstanden werden, das ein Bestell- und Auslieferungssystem für beispielsweise im Internet bestellte Waren umfasst. Das System ist vorzugsweise derart ausgestaltet, dass manuell-personelle Kontrollmechanismen für die Bestellberechtigung, Lieferberechtigung, Lieferbestätigung und Abrechnung ausgeschaltet sind. Das Bestell- und Auslieferungssystem erlaubt die Anlieferung von Waren, ohne dass jemand an der Lieferadresse zugegen ist. Das Bestell- und Auslieferungssystem kann zwischen dem Besteller und dem Lieferanten als Schnittstelle eingesetzt werden, und ermöglicht, dass verschiedene Lieferanten jederzeit bestellte Waren abliefern können, ohne dass eine Person zugegen ist, die die Waren annehmen und den Erhalt der Ware quittieren könnte. Hierzu ist bei einem bevorzugten Ausführungsbeispiel vorgesehen, dass das Zugangskontrollsystem Warenanlieferungen auf ihre Zugangsberechtigung überprüft, beispielsweise mittels des erwähnten Liefercodes, in Abhängigkeit von dieser Überprüfung einen Öffnungsmechanismus der Warenempfangsvorrichtung freigibt und die Einschleusung der Ware in die Warenempfangsvorrichtung (den Warencontainer) zulässt beziehungsweise - zur Verhinderung eines Missbrauchs den Öffnungsmechanismus in einem Schließzustand hält. Gemäß einer vorteilhaften Ausführungsform bestätigt das Zugangskontrollsystem selbstständig durch Datenkommunikation beim Lieferanten beziehungsweise Anbieter die Anlieferung der Ware, so dass dieser automatisch eine Rechnung erstellen und eventuell eine Bankabbuchung oder Kreditkartenbelastung oder dergleichen vornehmen kann. Ferner wird dem Liefernanten beziehungsweise Anbieter ermöglicht, automatisch mit einem eventuell beauftragten Spediteur abzurechnen.

Es ist vorteilhaft, das System auf Grundlage der folgenden Komponenten zu betreiben: Ein einem jeweiligen Kunden zugeordneter Personal-Computer, ein dem Kunden zugeordnetes Warenempfangssystem, das eine Warenempfangsvorrichtung und ein Zugangskontrollsystem umfasst. Die Warenempfangsvorrichtung ist vorzugsweise dafür ausgelegt, genormte Lieferkisten oder Lieferbehälter aufzunehmen.

Ferner wird das System bevorzugt auf einem Bestellungsbestätigungssystem aufgebaut, das die Bestellungen annimmt oder weiterleitet und angenommene Bestellungen bestätigt, indem es zumindest die anstehende Lieferung beziehungsweise die anstehenden Lieferungen identifizierende Daten an den Kunden (Besteller) beziehungsweise ein dem Kunden zugeordnetes System (insbesondere der Kunden-Personal-Computer beziehungsweise das Warenempfangssystem) übermittelt. Die Identifikation einer jeweiligen Lieferung kann mittels eines (gewünschtenfalls verschlüsselten) Liefercodes erfolgen. Die verschiedenen Funktionalitäten des Bestellungsbestätigungssystems können softwaremäßig realisiert sein. Entsprechendes gilt für diverse Funktionalitäten des Warenempfangssystems.

Gemäß einem Ausführungsbeispiel unterhält ein Anbieter oder Lieferant einen dem Bestellungsbestätigungssystem zugeordneten Serverdienst, bei dem über das Internet Warenbestellungen aufgegeben werden können. Bei Bestellung einer Ware übermittelt der Anbieter oder Lieferant vermittels des Bestellungsbestätigungssystems die anstehende Lieferung oder Lieferungen identifizierenden Daten (beispielsweise einen Liefercode) an eine dem Kunden zugeordnete Datenkommunikationsadresse, beispielsweise den Kunden-Personal-Computer. Dieser Liefercode kann in identischer oder komplementärer Form zugleich vom Lieferanten den anzuliefernden Waren zugeordnet werden, beispielsweise mittels eines den Liefercode enthaltenden Datenträgers, der der Ware beigefügt oder an dieser oder einer die Ware enthaltenden Lieferkiste angebracht wird. Der Liefercode wird dem Zugangskontrollsystem des Warenempfangssystems eingegeben, beispielsweise vermittels der Datenkommunikation zwischen dem Kunden-Personal-Computer und dem Zugangskontrollsystem. Zusammen mit dem Liefercode kann auch eine Datenkommunikationsadresse (gegebenenfalls Lieferanten-Telefonnummer) übermittelt werden, an die der Erhalt der Ware zu bestätigen ist.

Das Zugangskontrollsystem verwaltet die erhaltenen Liefercodes. Wird bei Anlieferung von Ware ein Liefercode gemeldet oder erfasst, so wird dieser Code mit den abgespeicherten Codes verglichen und im Falle des Vorliegens einer Zugangsberechtigung der Öffnungsmechanismus der Warenempfangsvorrichtung aktiviert.

Die Erfassung des Liefercodes kann beispielsweise mittels eines Bar-Code-Lesers erfolgen, der in die Warenempfangsvorrichtung integriert ist. Eine andere Möglichkeit ist, dass dem Zugangskontrollsystem ein jeweiliger Liefercode per Telekommunikation (Funk) übermittelt wird.

Die Warenempfangsvorrichtung ist vorzugsweise in der Lage, alle Waren, insbesondere Lebensmittel, in sich aufzunehmen, speziell auch gekühlte und tiefgefrorene Lebensmittel. Um ein entsprechendes Kühlaggregat der Warenempfangsvorrichtung in der erforderlichen Weise an- und ausschalten zu können, kann vorgesehen sein, dass der Kunde bei seiner Bestellung angeben kann, dass mit der Lieferung der betreffenden Ware das Kühlaggregat in einen Kühlmodus oder einen Gefriermodus zu schalten ist. In diesem Fall kann der Liefercode entsprechende Steuercodes für die Steuerung des Kühlaggregats umfassen.

Die Warenempfangsvorrichtung nimmt die angelieferte Ware (die beispielsweise in einer genormten Lieferkiste abgepackt ist) vorzugsweise nur dann auf, wenn das Zugangskontrollsystem einen Öffnungsmechanismus freigibt. Vorzugsweise ist die Konstruktion der Warenempfangsvorrichtung derart, dass es mehrere der genormten Lieferkisten oder Lieferbehälter nacheinander aufnehmen kann, bevor die angenommene Ware durch den Kunden wieder der Warenempfangsvorrichtung entnommen wird.

Die Warenempfangsvorrichtung kann dafür ausgelegt sein, in einer Hauswand, beispielsweise eines Einfamilienhauses, als Warenschleuse eingesetzt zu werden, bei der der Kunde die angelieferte, von außen eingeschleuste Ware von innen her aus der Warenempfangsvorrichtung entnimmt.

Man kann die Warenempfangsvorrichtung (den Warencontainer) in Modulbauweise ausführen, vorzugsweise derart, dass mehrere Warenempfangsvorrchtungen zu einer Großeinheit zusammengesetzt werden können. Die Großeinheit kann auch extern eines jeweiligen Hauses, beispielsweise in einem Vorgarten (gegebenenfalls mit entsprechender Ummantelung) oder in einer Garage aufgestellt werden. Selbstverständlich ist auch bei Einfamilienhäusern eine externe Aufstellung möglich.

In Mehrfamilienhäusern ist es auch denkbar, für jede Partei eine Wohnungswand zum Treppenhaus hin aufzubrechen, um eine einzelne Warenempfangsvorrichtung einzusetzen.

Eine Warenempfangsvorrichtung kann auch derart realisiert sein, dass nur ein Verschluss- beziehungsweise Öffnungsmechanismus (beispielsweise umfassend eine Klappe) in eine entsprechende Aussparung einer Haustür eingebaut ist. Das Zugangskontrollsystem kann extern installiert sein und per Kabel oder drahtlos mit dem Verschluss- beziehungsweise Öffnungsmechanismus verbunden sein.

Man kann vorsehen, dass das Warenempfangssystem die Entnahme der angelieferten Ware durch den Kunden im Serverdienst, also dem Bestellungsbestätigungssystem, meldet. Hierdurch ist eine Kontrolle möglich, ob die Ware wirklich entnommen wird, was insbesondere bei verderblicher Wae relevant ist und ermöglicht, dass der Kunde beispielsweise per Telefon an die erhaltene Ware erinnert wird. Es ist auch denkbar, dass in dem Fall, dass Ware zu einem vorgegebenen Termin nicht entnommen wurde, anstehende Liefertermine durch das Bestellungsbestätigungssystem modifiziert werden, da mangels der Entnahme der Ware die Warenannahmekapazität der Warenempfangsvorrichtung möglicherweise nicht mehr ausreicht. Alternativ wäre es möglich, per E-Mail oder Telefon beim Kunden rückzufragen, ob es bei den zur Zeit geltenden Lieferterminen bleiben soll.

Der dem Bestellungsbestätigungssystem zugeordnete Serverdienst kann auch dafür ausgelegt sein, dass dem Kunden verschiedene Lieferanten angeboten werden und sich der Kunde für einen Lieferanten entscheidet. Es kann vorgesehen sein, dass der Kunde einen Wunsch-Liefertermin angibt. In diesem Zusammenhang ist es zweckmäßig, wenn der Serverdienst den Wunsch-Liefertermin auf Plausibilität überprüft, denn die Warenempfangsvorrichtung könnte durch vorausgegangene Bestellungen zum gewünschten Liefertermin schon belegt sein. Ferner sollte in der Regel ein Abgleich des Wunsch-Liefertermins mit der Lieferfähigkeit und den Lieferbedingungen des Anbieters (des Lieferanten) erfolgen. Sind die verschiedenen Daten nicht konsistent miteinander beziehungsweise nicht plausibel, können dem Kunden Vorschläge zur Abänderung des Liefertermins oder der Liefermenge (je nach Verfügbarkeit und Annahmekapazität) gemacht werden.

In dem Fall, dass der Serverdienst Bestellungen an einen gegenüber dem Betreiber des Serverdienstes unabhängigen Lieferanten oder Anbieter vermittelt, kann der Serverdienst (das Bestellungsbestätigungssystem) den Kunden per Datenkommunikation an den betreffenden (gegebenenfalls vom Kunden ausgesuchten) Lieferanten übergeben, vorzugsweise unter Übermittlung eines schon teilweise festgelegten Liefercodes. Der Liefercode kann zum Zeitpunkt der Übergabe an den Lieferanten beispielsweise schon die folgenden Daten codieren: Lieferant (beispielsweise eine feste Lieferantennummer), Kühlung: Ja oder Nein, Tiefkühlung: Ja oder Nein, Liefertag, zulässige Anzahl von Lieferbehältern (Lieferkisten). Die Angabe der zulässigen Anzahl von Lieferkisten kann von der Anzahl der der Warenempfangsvorrichtung des Kunden zugeordneten Lieferkisten und der für einen bestimmten Tag schon festgelegten Lieferungen abhängen.

Der Kunde kann nun seine Bestellung beim Lieferanten aufgeben, wobei es zweckmäßig ist, wenn dem Kunden hierbei die verbleibende Annahmekapazität der Warenempfangsvorrichtung sowie gegebenenfalls die verbleibende Aufnahmekapazität eines jeweiligen Lieferbehälters (Lieferkiste) angezeigt wird.

Hat der Kunde seine Bestellung aufgegeben, wird die Bestellung durch das Bestellungsbestätigungssystem bestätigt. Beim hier beschriebenen Ausführungsbeispiel übermittelt der Lieferant (genauer ein Bestellungsannahmesystem des Lieferanten) den um eine Zugangsberechtigung und eine eigene Datenkombinationsadresse erweiterten Liefercode per Datenkommunikation an das Bestellungsbestätigungssystem zurück, das diesen Liefercode dann zur Bestätigung der Bestellung an eine Datenkommunikationsadresse des Kunden, beispielsweise den Kunden-Personal-Computer, per Datenkommunikation übermittelt. Die Daten werden vorzugsweise in einer Kunden-Datei des Bestellungsbestätigungssystems abgespeichert, um bei weiteren Bestellungen des Kunden die Plausibilitätsprüfungen aktualisiert durchführen zu können.

Der Liefercode kann insgesamt beispielsweise aus sieben Teilen bestehen: Lieferantennummer, Kühlung (Ja/Nein), Tiefkühlung (Ja/Nein), Anzahl der Lieferkisten, Liefertag, Zugangskontrollberechtigung, Lieferanten-Datenkommunikationsadresse oder Lieferanten-Telefonnummer.

Die vorstehend schon mehrfach erwähnte Lieferkiste kann im Prinzip beliebig gestaltet sein. Zweckmäßig ist, eine Fläche für die Anbringung eines Bar-Codes vorzusehen. Ferner können Führungsschienen vorgesehen sein, um für eine vorgegebene Positionierung der Lieferkiste relativ zu einem Bar-Code-Leser zu sorgen. Eine Lieferkiste könnte beispielsweise die Normmaße 500 x 500 x 500 mm aufweisen.

Im Folgenden wird ein Ausführungsbeispiel für eine Warenempfangsvorrichtung gegeben, die in Verbindung mit einem der vorangehenden Ausführungsbeispiele zum Einsatz kommen könnte.

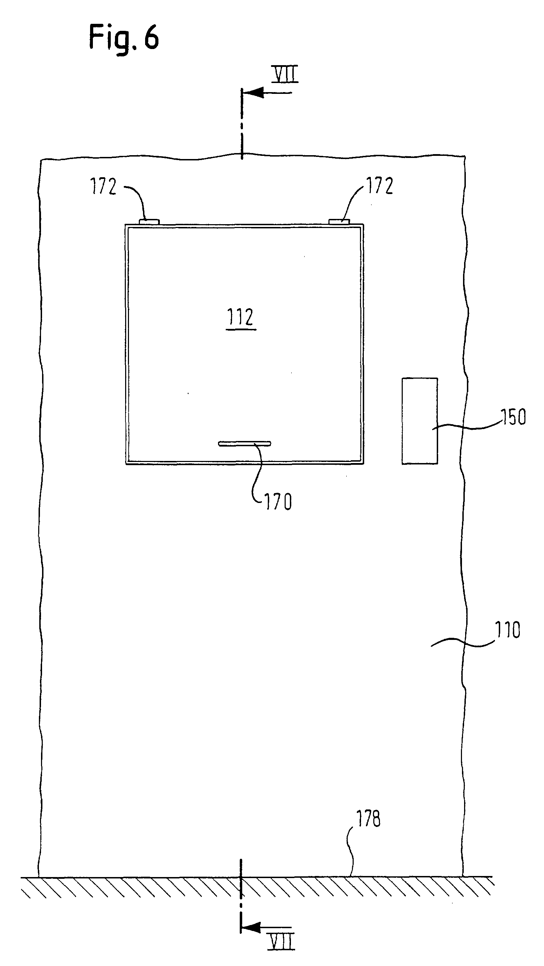

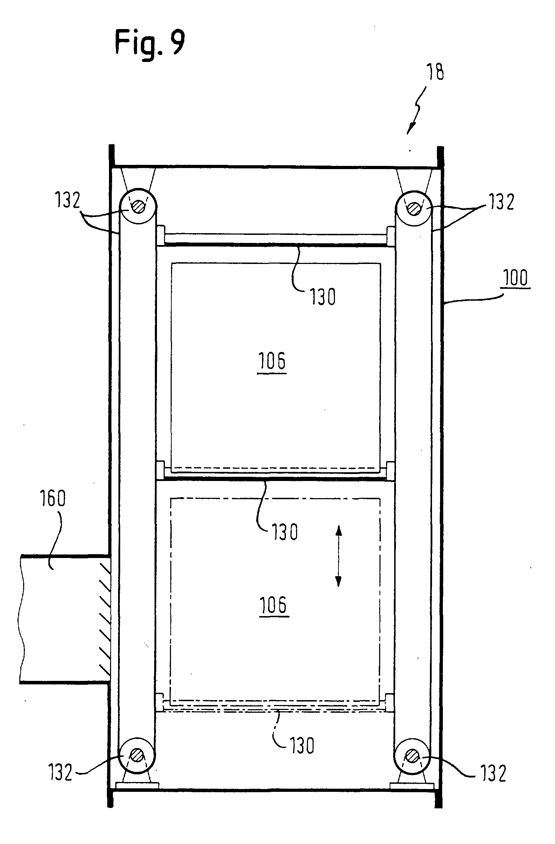

Die Warenempfangsvorrichtung 18 der Fig. 6 bis 10 weist ein Gehäuse 100 auf, das einen als Warenschleuse dienenden Warenaufnahmeraum 102 und einen hieran sich anschließenden, mehrere Warenlagerplätze aufweisenden Warenaufnahmebereich 104 aufweist. Zweckmäßigerweise ist der Warenaufnahmebereich 102 dafür ausgelegt, genau eine Norm-Lieferkiste 106 (beispielsweise mit den Maßen 500 x 500 x 500 mm) aufzunehmen. Der Warenaufnahmebereich 104 ist vorzugsweise dafür ausgelegt, dass an jedem Warenlagerplatz genau eine der genormten Lieferkisten aufgenommen werden kann.

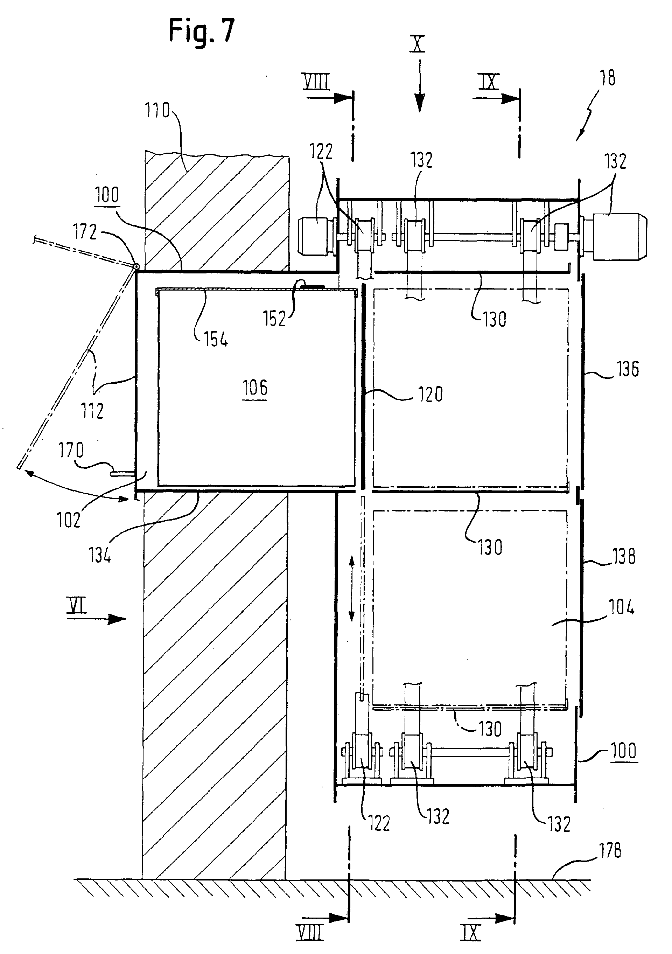

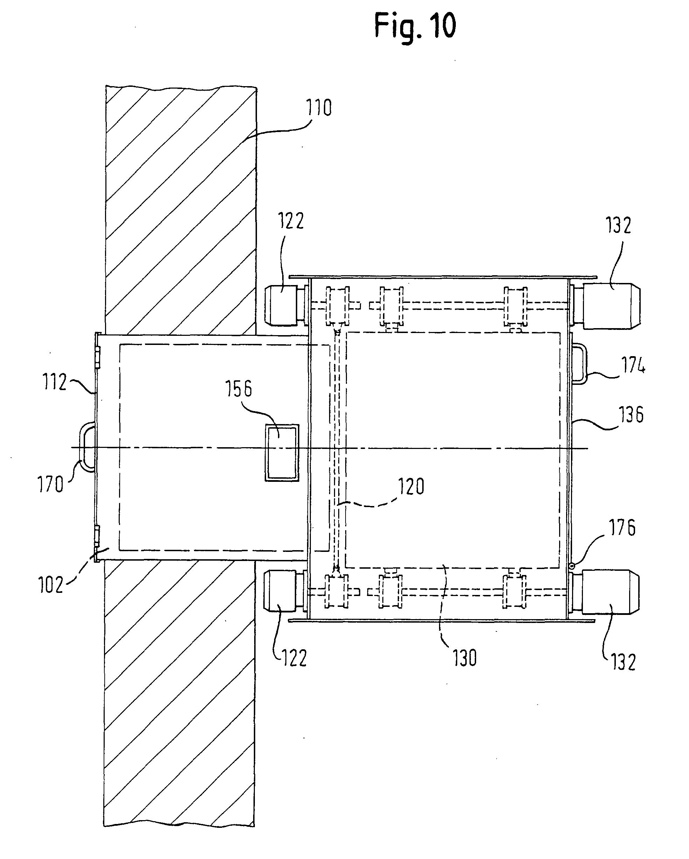

Wie in Fig. 7 und 10 zu erkennen, ist der Warenaufnahmeraum 102 in einem in eine Wand 110 eingefügten Gehäuseabschnitt ausgebildet. Zur Außenseite der Wand hin ist der Warenaufnahmeraum 102 durch eine Klappe 112 verschlossen beziehungsweise verschließbar. Es ist eine nicht dargestellte Mechanik vorgesehen, die die Klappe 112 entweder in einem geschlossenen Zustand hält oder ein manuelles Öffnen der Klappe zulässt. Die Mechanik wird unter Vermittlung einer Steuerschaltung angesteuert, um je nach Vorgabe durch eine zugeordnete Steuereinheit die Klappe 112 geschlossen zu halten oder - zur Annahme von gelieferter Ware - ein Öffnen der Klappe 112 zuzulassen.

Der Warenaufnahmeraum 102 ist durch einen Schieber 120 vom Warenaufnahmebereich 104 getrennt oder trennbar. Der Schieber 120 kann mittels eines Riemenantriebs 122 zwischen einer Schließposition, in der er den Warenannahmeraum 102 gegenüber dem Warenaufnahmebereich 104 abgeschlossen hält, und einer (vertikal tiefer liegenden) Öffnungsposition, in der eine Warendurchlassöffnung zwischen dem Warenaufnahmeraum 102 mit dem Warenaufnahmebereich 104 geöffnet ist, verstellt werden.

Im Warenaufnahmebereich 104 sind wenigstens zwei Förderplattformen 130 mittels eines zugeordneten Riemenantriebs 132 vertikal verstellbar. Zur Übernahme einer Lieferkiste 106 vom Warenaufnahmeraum 102 in den Warenaufnahmebereich 104 kann eine jeweilige Förderplattform (auch als Lagerplattform bezeichenbar) in eine Vertikalposition gebracht werden, die niveaugleich zu einer Lagerfläche 134 des Warenaufnahmeraums 102 ist, so dass bei in der Öffnungsstellung angeordnetem Schieber 120 eine im Warenaufnahmeraum 102 angeordnete Lieferkiste auf die betreffende Förderplattform 130 hinübergeschoben werden kann. Beim gezeigten Ausführungsbeispiel ist davon ausgegangen, dass dieses Hinüberschieben manuell bei geöffneter Klappe 112 von außen her durch die der Klappe zugeordnete Warendurchlassöffnung erfolgt. Es kann aber auch eine entsprechende maschinelle Fördereinrichtung vorgesehen sein, die eine in den Warenaufnahmeraum 102 aufgenommene Lieferkiste an eine jeweilige Förderplattform 130 übergibt, vorzugsweise bei geschlossener Klappe 112, um Manipulationen oder Missbrauch entgegenzuwirken.

Beim gezeigten Ausführungsbeispiel sind zwei Förderplattformen 130 vorgesehen. Sobald die vertikal tiefer am Riemenantrieb angeordnete Förderplattform 130 eine Lieferkiste 106 aufgenommen hat, kann die Förderplattform 130 samt der Lieferkiste vertikal nach unten bewegt werden, so dass die zweite, vertikal obere Förderplattform 130 auf niveaugleiche Vertikalposition zur Lagerfläche 134 kommt und dementsprechend eine weitere Lieferkiste aufnehmen kann.

Von der Innenseite her können die auf den Förderplattformen 130 angeordneten Lieferkisten durch Klappen oder Türen 136 und 138 aus der Warenempfangsvorrichtung 18 entnommen werden.

Zur Übergabe einer Lieferung an die Warenempfangsvorrichtung 18 ist auf der Außenseite der Wand 110 ein Bedienertableau 150 angeordnet, in die ein Lieferbote einen die Lieferung identifizierenden Liefercode eintippen kann. Dieser Liefercode wird mit zuvor abgespeicherten, die Lieferung ankündigenden Daten verglichen. Ist die Annahmeanforderung zulässig, so wird die die Klappe verschlossen haltende Mechanik in einen Annahmezustand versetzt, in dem sich die Klappe 112 manuell öffnen lässt. Der Lieferbote kann dann die Lieferkiste 106 in den Warenaufnahmeraum 102 einführen.

Die Lieferkiste weist eine Codierung, beispielsweise einen Bar-Code 152, auf. Im Beispielfall ist die Codierung, die den Liefercode vorzugsweise in verschlüsselter Form repräsentiert, an einem Lieferkistendeckel 154 auf dessen Oberseite angebracht. Eine im Warenaufnahmeraum 102 vorgesehene, entsprechend angeordnete Erfassungsanordnung 156, beispielsweise ein Bar-Code-Leser 156, nimmt die Codierung auf, woraufhin der Liefercode decodiert und mit den abgespeicherten, die Lieferung ankündigenden Daten verglichen wird. Bestätigt sich, dass die zuvor schon mittels des Bedienertableaus 150 eingegebene Annahmeanforderung zulässig ist, wird die Lieferkiste endgültig angenommen, indem der Schieber 120 aus seiner Schließposition in seine Öffnungsposition verstellt wird, so dass die Lieferkiste auf eine Förderplattform 130 des Warenaufnahmebereichs 104 hinübergeschoben werden kann, wodurch die Lieferkiste endgültig angenommen wird. Der Bote kann nun die Klappe 112 schließen. Mittels des Riemenantriebs 122 wird der Schieber 120 wieder in die Schließposition zurückgefahren. Sofern am betreffenden Liefertermin bisher nur eine Lieferkiste angeliefert wurde und alle Warenlagerplätze zuvor frei waren, verfährt nun der Riemenantrieb 132 die die angenommene Lieferkiste (erste Lieferkiste) tragende Förderplattform 130 vertikal nach unten, so dass die Warenempfangsvorrichtung 18 für die Annahme einer weiteren Lieferkiste (der zweiten Lieferkiste) bereit ist. Die Annahme einer zweiten Lieferkiste erfolgt in der gleichen Art und Weise, wobei allerdings die Förderplattform 130 nach Übernahme der zweiten Lieferkiste in der mit der Lagerfläche 134 bündigen Vertikalstellung bleibt.

Die Codierung 152 kann auch noch weitere Angaben enthalten, um eine Lieferung als zulässig identifizieren zu können, beispielsweise den Liefertag, die Lieferadresse und so weiter.

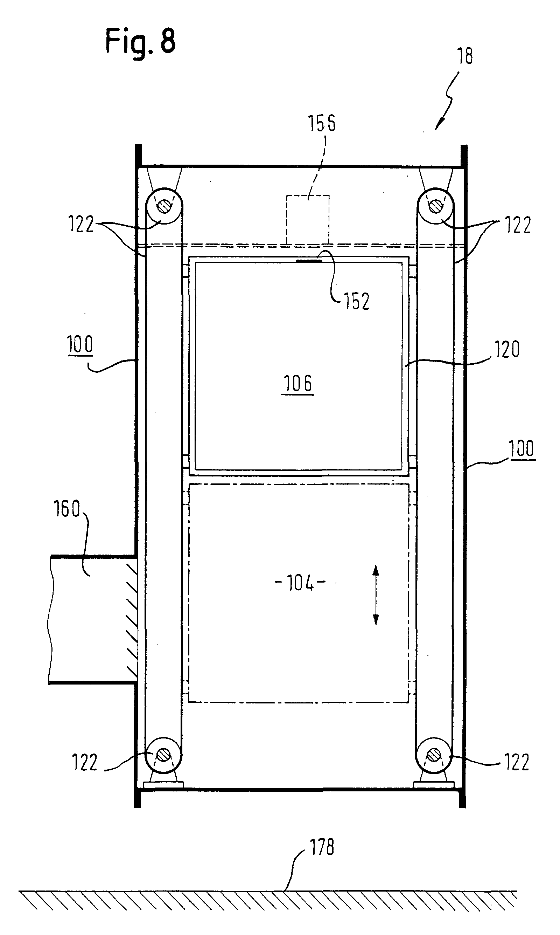

Vorzugsweise weist die Warenempfangsvorrichtung 18 ein Kühlaggregat 160 auf, das den Warenaufnahmebereich 104 kühlt, um das Verderben von Frischwaren zu verhindern. Gewünschtenfalls kann das Kühlaggregat 160 auch in einen Gefriermodus versetzt werden, um tiefgefrorene Lebensmittel im tiefgefrorenen Zustand zu halten. Anstelle der Anordnung des Kühlaggregats 160 seitlich unten am Warenaufnahmebereich 104 könnte auch eine Anordnung des Kühlaggregats 160 oben am Gehäuse 100 oberhalb des Warenaufnahmebereichs 104 vorgesehen sein. Der Bar-Code-Leser 156 könnte auch an einer anderen Stelle angebracht sein, beispielsweise seitlich versetzt gegenüber der in Fig. 8 gezeigten Position. Die Riemenantriebe können mit Spannvorrichtungen ausgeführt sein.

In den Figuren bezeichnet 170 einen Handgriff der Klappe 112, bezeichnet 172 ein Schwenklager der Klappe 112, bezeichnet 174 einen Handgriff der Klappe oder Tür 136 und bezeichnet 176 ein Schwenklager oder Scharnier der Klappe beziehungsweise Tür 136. Ferner bezeichnet 178 einen Fußboden. Gemäß dem gezeigten Ausführungsbeispiel hängt die Warenannahmevorrichtung 18 an der Hauswand 110, ohne den Fußboden 178 zu berühren. Man kann aber auch vorsehen, dass die Warenempfangsvorrichtung 18 auf dem Fußboden 178 steht.

Es kann vorgesehen sein, dass das Bedienertableau den Beladezustand des Warenaufnahmebereichs 104 anzeigt. Die Stellungen der Förderplattformen 130 können durch eine entsprechende Sensoranordnung erfasst werden. Es kann vorgesehen sein, dass alle Vorgänge im Zusammenhang mit der Warenannahmevorrichtung 18 protokolliert werden, insbesondere die Annahme von Lieferkisten nach Lieferant, Datum und Uhrzeit. Die Warenempfangsvorrichtung 18 kann ohne Weiteres vandalensicher ausgeführt sein.

Alle Vorgänge im Zusammenhang mit der Warenempfangsvorrichtung 18 mit Ausnahme des Einschleusen der Lieferkiste in den Warenaufnahmeraum und der Entnahme der Lieferkisten von den Förderplattformen können vollautomatisiert erfolgen. Hierzu könnte die schon erwähnte Fördereinrichtung zum Überführen einer Lieferkiste aus dem Warenaufnahmeraum auf eine jeweilige Förderplattform vorgesehen sein. Ferner kann ein Antrieb vorgesehen sein, der die Klappe 112 selbsttätig öffnet, so dass auf den Handgriff 170 verzichtet werden kann und dementsprechend kein Angriffspunkt für von außen angreifende Vandalen besteht. Für besonders hohe Sicherheit könnte man auch vorsehen, auf ein von außen zugängliches Bedienertableau zu verzichten und stattdessen eine drahtlose Schnittstelle zu einer Fernbedienung vorsehen. Beispielsweise könnte modernste Kurzstrecken-Funkkommunikationstechnologie (Stichwort: Bluetooth) angewendet werden.

Die Erfindung betrifft nach einem Aspekt ein System zum automatisierten Bestätigen von Warenbestellungen und zum automatisierten Annehmen von auf die Warenbestellungen gelieferter Ware unter automatisierter Übermittlung von sich auf die betreffende Ware beziehenden Daten. Die Erfindung betrifft ferner ein bestellerseitiges oder empfängerseitiges Warenempfangssystem und ein lieferantenseitiges oder anbieterseitiges Bestellungsbestätigungssystem. Das Warenempfangssystem (auch als Warenannahmesystem bezeichenbar) und das Bestellungsbestätigungssystem sind vorzugsweise für die Realisierung eines Bestell- und Belieferungsprogramm vorgesehen.

## Patentansprüche

1. System (10) zum automatisierten Bestätigen von Warenbestellungen und zum automatisierten Annehmen von auf die Warenbestellungen gelieferter Ware unter automatisierter Übermittlung von sich auf die betreffende Ware beziehenden Daten, umfassend:
a) wenigstens ein bestellerseitiges oder empfängerseitiges Warenempfangssystem (14), das eine Steuereinheit (16; 32), einen Datenspeicher (64), eine elektronische Kommunikationseinheit (66, 68), eine Warenempfangsvorrichtung (18) und eine Identifikationseinheit (34) aufweist;
b) wenigstens ein lieferantenseitiges oder anbieterseitiges Bestellungsbestätigungssystem (12), das einen Datenspeicher und eine elektronische Kommunikationseinheit aufweist;
wobei das Warenempfangssystem (14) dafür ausgelegt ist:
a1) vermittels Datenkommunikation über seine Kommunikationseinheit (66, 68) sich auf eine anstehende Warenlieferung oder anstehende Warenlieferungen beziehende Daten automatisiert zu empfangen und in seinem Datenspeicher auf den empfangenden Daten beruhende Daten abzuspeichern, die die anstehende(n) Warenlieferung(en) identifizieren,
a2) in Antwort auf eine Annahmeanforderung sich auf gelieferte Ware beziehende Daten unter Vermittlung der Identifikationseinheit (34) aufzunehmen und vermittels der Steuereinheit (16; 32) mit den im Datenspeicher abgespeicherten Daten zu vergleichen,
a3) im Falle, dass keine Annahmeanforderung vorliegt, die Annahmekapazität der Warenempfangsvorrichtung (18) erschöpft ist oder der Vergleich zwischen den aufgenommenen Daten und den abgespeicherten Daten ergibt, dass die Annahmeanforderung nicht zulässig ist, die Warenempfangsvorrichtung (18) in einem Abweismodus zu halten oder in diesen zu versetzen, in dem dadurch keine Ware angenommen wird, dass ein Warenaufnahmeraum der Warenempfangsvorrichtung von einer Außenseite her unzugänglich bleibt,
a4) im Falle, dass der Vergleich zwischen den aufgenommenen Daten und den abgespeicherten Daten ergibt, dass die Annahmeanforderung zulässig ist und die Annahmekapazität der Warenempfangsvorrichtung (18) nicht erschöpft ist, die Warenempfangsvorrichtung in einen Annahmemodus zu versetzen, in dem die gelieferte Ware dadurch angenommen wird, dass die Ware von der Außenseite her in den Warenaufnahmeraum (102) eingelassen wird, und
a5) nach oder im Zuge der Annahme von Ware den Erhalt der Ware automatisiert vermittels Datenkommunikation über seine Kommunikationseinheit an eine der angenommenen Ware zugeordnete Datenkommunikationsadresse, gegebenenfalls an das Bestellungsbestätigungssystem (12), zu bestätigen;
und wobei das Bestellungsbestätigungssystem (12) dafür ausgelegt ist:
b1) in Antwort auf dem Bestellbestätigungssystem eingegebene oder von diesem empfangene Daten, die sich auf wenigstens eine Warenbestellung beziehen und wenigstens einem vorgegebenen oder vorgebbaren Kriterium genügen, die Warenbestellung automatisiert dadurch zu bestätigen, dass es Daten, die sich auf wenigstens eine auf die Bestellung zu erfolgende Lieferung der bestellten Ware beziehen und die Lieferung identifizierende Daten umfassen, vermittels Datenkommunikation an eine der Warenbestellung zugeordnete Datenkommunikationsadresse, gegebenenfalls an das Warenempfangssystem (14), über seine Kommunikationseinheit automatisiert übermittelt.

2. System nach Anspruch 1, **gekennzeichnet durch**:
b2a) das Bestellungsbestätigungssystem (12) dient als Bestellungsannahmesystem und ist dafür ausgelegt, vermittels Datenkommunikation über seine Kommunikationseinheit erfolgende Warenbestellungen automatisiert **dadurch** anzunehmen, dass es die Warenbestellung kennzeichnende Daten automatisiert in seinem Datenspeicher abspeichert oder per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Weiterbearbeitungssystem (22), übermittelt und die jeweils angenommene Warenbestellung automatisiert gemäß Merkmalsgruppe b1) bestätigt.

3. System nach Anspruch 2, **gekennzeichnet durch**:
b3a) das Bestellungsbestätigungssystem ist dafür ausgelegt, für eine angenommene Warenbestellung die zu liefernde Ware, die Lieferadresse und die anstehende Warenlieferung oder anstehenden Warenlieferungen identifizierende Daten vermittels Datenkommunikation über seine Kommunikationseinheit automatisiert an wenigstens eine fest eingestellte oder einstellbare oder an wenigstens eine der bestellten Ware oder der Lieferadresse zugeordnete oder an wenigstens eine einer bestellerseitigen Auswahl entsprechende Datenkommunikationsadresse zu übermitteln.

4. System nach Anspruch 1, **gekennzeichnet durch**:
b2b) das Bestellungsbestätigungssystem (12) dient als Bestellungsweiterleitsystem und ist dafür ausgelegt, vermittels Datenkommunikation über seine Kommunikationseinheit erfolgende Warenbestellungen automatisiert per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Bestellungsannahmesystem (22), zu übermitteln und in Antwort auf eine Bestellungsannahme signalisierende, per Datenkommunikation empfangene Daten die jeweils angenommene Warenbestellung automatisiert gemäß Merkmalsgruppe b1) zu bestätigen.

5. System nach einem der Ansprüche 2 bis 4, **dadurch gekennzeichnet, dass** das Bestellungsbestätigungssystem (12) dafür ausgelegt ist, automatisiert eine Überprüfung auf Plausibilität und gegenseitige Konsistenz von einen bestellerseitigen Lieferterminwunsch angebenden Daten, von einen bestellerseitigen Liefermengenwunsch angebenden Daten und von eine Warenlieferfähigkeit angebenden Daten sowie gegebenenfalls von eine Annahmekapazität der bestellerseitigen oder empfängerseitigen Warenempfangsvorrichtung (18) angebenden Daten, vorzugsweise unter Berücksichtigung von Daten, die terminlich schon festgelegte Warenlieferungen vorangehender Warenbestellungen angeben, durchzuführen und die gemäß Merkmalsgruppe b1) zu übermittelnden, die Lieferung identifizierenden Daten einschließlich den Liefertermin oder die Liefertermine angebenden Daten nur dann zu übermitteln, wenn die überprüften Daten plausibel und gegenseitig konsistent sind.

6. System nach einem der Ansprüche 2 bis 5, **gekennzeichnet durch**:
a6) das Warenempfangssystem (14) dient als Warenbestellsystem und ist dafür ausgelegt, dass vermittels Datenkommunikation zwischen einem auswählbaren oder fest zugeordneten Bestellungsbestätigungssystem (12) einerseits und dem Warenempfangssystem (14) andererseits über deren Kommunikationseinheiten Warenbestellungen beim oder über das Bestellungsbestätigungssystem aufgegeben werden können.

7. System nach einem der Ansprüche 1 bis 6, **dadurch gekennzeichnet, dass** das Warenempfangssystem dafür ausgelegt ist, im Falle einer zulässigen Annahmeanforderung die betreffende Ware zuerst vorläufig dadurch anzunehmen, dass die Ware von der Außenseite her in den Warenaufnahmeraum (104) eingelassen wird, dann unter Vermittlung der Identifikationseinheit (34) sich auf die vorläufig angenommene Ware beziehende Daten aufzunehmen und vermittels der Steuereinheit (16; 32) mit den im Datenspeicher abgespeicherten Daten zu vergleichen, um festzustellen, ob die vorläufig angenommene Ware der zu liefernden Ware entspricht, und dann im Bejahungsfall die vorläufig angenommene Ware durch wenigstens eine der folgenden Aktionen endgültig anzunehmen:
- die Ware wird von dem Warenaufnahmeraum in einen geschützten Warenaufnahmebereich (104) der Warenempfangsvorrichtung (18) eingelassen,
- es wird akustisch oder/und optisch oder/und elektronisch oder/und durch Ausdruck einer Empfangsquittung die Annahme der Ware signalisiert,
- der Erhalt der Ware wird gemäß Merkmalsgruppe a5) an eine der Ware zugeordnete Datenkommunikationsadresse, gegebenenfalls an das Bestellungsbestätigungssystem (12), bestätigt.

8. Warenempfangssystem (14) zum automatisierten Annehmen von beispielsweise auf eine Warenbestellung gelieferter Ware, umfassend eine Steuereinheit (16; 32), einen Datenspeicher (64), eine Warenempfangsvorrichtung (18) und eine Identifikationseinheit (34);
wobei das Warenempfangssystem dafür ausgelegt ist:
a2) in Antwort auf eine Annahmeanforderung sich auf gelieferte Ware beziehende Daten unter Vermittlung der Identifikationseinheit (34) aufzunehmen und vermittels der Steuereinheit (16; 32) mit zuvor im Datenspeicher abgespeicherten, wenigstens eine Warenlieferung identifizierenden Daten zu vergleichen,
a3) im Falle, dass keine Annahmeanforderung vorliegt, die Annahmekapazität der Warenempfangsvorrichtung (18) erschöpft ist oder der Vergleich zwischen den aufgenommenen Daten und den abgespeicherten Daten ergibt, dass die Annahmeanforderung nicht zulässig ist, die Warenempfangsvorrichtung (18) in einem Abweismodus zu halten oder in diesen zu versetzen, in dem dadurch keine Ware angenommen wird, dass ein Warenaufnahmeraum der Warenempfangsvorrichtung von einer Außenseite her unzugänglich bleibt, und
a4) im Falle, dass der Vergleich zwischen den aufgenommenen Daten und den abgespeicherten Daten ergibt, dass die Annahmeanforderung zulässig ist und die Annahmekapazität der Warenempfangsvorrichtung (18) nicht erschöpft ist, die Warenempfangsvorrichtung in einen Annahmemodus zu versetzen, in dem die gelieferte Ware dadurch angenommen wird, dass die Ware von der Außenseite her in den Warenaufnahmeraum eingelassen wird.

9. System nach Anspruch 8, **gekennzeichnet durch**:
a1) das System ist dafür ausgelegt, vermittels Datenkommunikation über seine Kommunikationseinheit (66, 68) sich auf eine anstehende Warenlieferung oder anstehende Warenlieferungen beziehende Daten automatisiert zu empfangen und in seinem Datenspeicher auf den empfangenden Daten beruhende Daten zu speichern, die die anstehende(n) Warenlieferung(en) identifizieren.

10. System nach Anspruch 8 oder 9, **gekennzeichnet durch**:
a5) das System ist dafür ausgelegt, nach oder im Zuge der Annahme von Ware den Erhalt der Ware automatisiert vermittels Datenkommunikation über seine Kommunikationseinheit an eine der angenommenen Ware zugeordnete Datenkommunikationsadresse, gegebenenfalls an ein zugeordnetes Bestellungsbestätigungssystem (12), zu bestätigen.

11. System nach einem der Ansprüche 8 bis 10, **gekennzeichnet durch**:
a6) das Warenempfangssystem (14) dient als Warenbestellsystem und ist dafür ausgelegt, dass vermittels Datenkommunikation mit einer auswählbaren oder fest zugeordneten Datenkommunikationsadresse Warenbestellungen aufgegeben werden können.

12. System nach einem der Ansprüche 8 bis 11, **gekennzeichnet durch**: das System ist dafür ausgelegt, im Falle einer zulässigen Annahmeanforderung die betreffende Ware zuerst vorläufig **dadurch** anzunehmen, dass die Ware von der Außenseite her in den Warenaufnahmeraum (104) eingelassen wird, dann unter Vermittlung der Identifikationseinheit (34) sich auf die vorläufig angenommene Ware beziehende Daten aufzunehmen und vermittels der Steuereinheit (16; 32) mit den im Datenspeicher abgespeicherten Daten zu vergleichen, um festzustellen, ob die vorläufig angenommene Ware der zu liefernden Ware entspricht, und dann im Bejahungsfall die vorläufig angenommene Ware **durch** wenigstens eine der folgenden Aktionen endgültig anzunehmen:
- die Ware wird von dem Warenaufnahmeraum in einen geschützten Warenaufnahmebereich (104) der Warenempfangsvorrichtung (18) eingelassen,
- es wird akustisch oder/und optisch oder/und elektronisch oder/und **durch** Ausdruck einer Empfangsquittung die Annahme der Ware signalisiert,
- der Erhalt der Ware wird gemäß Merkmalsgruppe a5) an eine der Ware zugeordnete Datenkommunikationsadresse, gegebenenfalls an ein zugeordnetes Bestellungsbestätigungssystem (12), bestätigt.

13. System nach einem der vorhergehenden Ansprüche, **dadurch gekennzeichnet, dass** die Identifikationseinheit (34) wenigstens eine optische Erfassungseinheit, gegebenenfalls einen Bar-Code-Leser (156), oder/und ein Lieferantenbedienertableau (150) zur manuellen Eingabe von sich auf die gelieferte Ware beziehenden Daten oder/und eine vorzugsweise drahtlose elektronische Kommunikationsschnittstelle zur elektronischen Eingabe von sich auf die gelieferte Ware beziehenden Daten aufweist.

14. System nach einem der vorhergehenden Ansprüche, **dadurch gekennzeichnet, dass** die Warenempfangsvorrichtung (18) ein Kühlaggregat (160) zur Kühlung von kühlungsbedürftiger oder Gefrierbedingungen bedürfender Ware aufweist, wobei das Kühlaggregat vorzugsweise automatisiert in Abhängigkeit von sich auf die angenommene Ware beziehenden oder die Warenlieferung identifizierenden Daten einschaltbar ist.

15. System nach einem der vorhergehenden Ansprüche, **dadurch gekennzeichnet, dass** die Warenempfangsvorrichtung (18) eine Sensoranordnung zum Erfassen einer Entnahme der angenommenen Ware aus dem Warenaufnahmeraum (102) oder dem Warenaufnahmebereich (104) aufweist, wobei das Warenempfangssystem in Antwort auf das Erfassen einer Warenentnahme automatisiert per Datenkommunikation eine die Warenentnahme angebende Mitteilung an eine vorgegebene oder vorgebbare, gegebenenfalls der entnommenen Ware zugeordnete Datenkommunikationsadresse, gegebenenfalls an ein zugeordnetes Bestellungsbestätigungssystem (12), übermittelt.

16. System nach einem der vorhergehenden Ansprüche, mit wenigstens einer Warenempfangsvorrichtung (18) beziehungsweise einer Kombination aus wenigstens einer Warenempfangsvorrichtung und einer Mehrzahl von Warentransportbehältern nach einem der folgenden Ansprüche 25 bis 36.

17. Bestellungsbestätigungssystem (12) zum automatisierten Bestätigen von Warenbestellungen unter automatisierter Übermittlung von sich auf die betreffende Ware beziehenden Daten, umfassend einen Datenspeicher und eine elektronische Kommunikationseinheit;
wobei das das Bestellungsbestätigungssystem (12) dafür ausgelegt ist:
b1) in Antwort auf dem Bestellbestätigungssystem eingegebene oder von diesem empfangene Daten, die sich auf wenigstens eine Warenbestellung beziehen und wenigstens einem vorgegebenen oder vorgebbaren Kriterium genügen, die Warenbestellung automatisiert dadurch zu bestätigen, dass es Daten, die sich auf wenigstens eine auf die Bestellung zu erfolgende Lieferung der bestellten Ware beziehen und die Lieferung identifizierende Daten umfassen, vermittels Datenkommunikation an eine der Warenbestellung zugeordnete Datenkommunikationsadresse über seine Kommunikationseinheit automatisiert übermittelt,
und wobei das Bestellungsbestätigungssystem (12) ferner dafür ausgelegt ist, automatisiert eine Überprüfung auf Plausibilität und gegenseitige Konsistenz von einen bestellerseitigen Lieferterminwunsch angebenden Daten, von einen bestellerseitigen Liefermengenwunsch angebenden Daten und von eine Warenlieferfähigkeit angebenden Daten sowie gegebenenfalls von eine Annahmekapazität, die einer bestellerseitig definierten Lieferadresse zugeordnet ist, angebenden Daten, vorzugsweise unter Berücksichtigung von Daten, die terminlich schon festgelegte Warenlieferungen an diese Lieferadresse vorangehender Warenbestellungen angeben, durchzuführen und die gemäß Merkmalsgruppe b1) zu übermittelnden, die Lieferung identifizierenden Daten einschließlich den Liefertermin oder die Liefertermine angebenden Daten nur dann zu übermitteln, wenn die überprüften Daten plausibel und gegenseitig konsistent sind.

18. System nach Anspruch 17, **gekennzeichnet durch**:
b2a) das Bestellungsbestätigungssystem (12) dient als Bestellungsannahmesystem und ist dafür ausgelegt, vermittels Datenkommunikation über seine Kommunikationseinheit erfolgende Warenbestellungen automatisiert **dadurch** anzunehmen, dass es die Warenbestellung kennzeichnende Daten automatisiert in seinem Datenspeicher abspeichert oder per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Weiterbearbeitungssystem (22), übermittelt und die jeweils angenommene Warenbestellung automatisiert gemäß Merkmalsgruppe b1) bestätigt.

19. System nach Anspruch 18, **gekennzeichnet durch**:
b3a) das Bestellungsbestätigungssystem ist dafür ausgelegt, für eine angenommene Warenbestellung die zu liefernde Ware, die und die anstehende Warenlieferung oder anstehenden Warenlieferungen identifizierende Daten vermittels Datenkommunikation über seine Kommunikationseinheit automatisiert an wenigstens eine fest eingestellte oder einstellbare oder an wenigstens eine der bestellten Ware oder der Lieferadresse zugeordnete oder an wenigstens eine einer bestellerseitigen Auswahl entsprechende Datenkommunikationsadresse zu übermitteln.

20. System nach Anspruch 17, **gekennzeichnet durch**:
b2b) das Bestellungsbestätigungssystem (12) dient als Bestellungsweiterleitsystem und ist dafür ausgelegt, vermittels Datenkommunikation über seine Kommunikationseinheit erfolgende Warenbestellungen automatisiert per Datenkommunikation an wenigstens eine fest eingestellte oder einstellbare oder an wenigstens eine der bestellten Ware oder einer in der Warenbestellung bestimmten Lieferadresse zugeordnete oder an wenigstens eine einer bestellerseitigen Auswahl entsprechende Datenkommunikationsadresse, gegebenenfalls an ein zugeordnetes Bestellungsannahmesystem (22), zu übermitteln und in Antwort auf eine Bestellungsannahme signalisierende, per Datenkommunikation empfangene Daten die jeweils angenommene Warenbestellung automatisiert gemäß Merkmalsgruppe b1) zu bestätigen.

21. System nach einem der vorhergehenden Ansprüche, **dadurch gekennzeichnet, dass** es auf Grundlage eines Mehrzweck-Computer-systems, gewünschtenfalls eines Personal-Computers (16) oder eines Server-Computers (12), sowie vorzugweise auf Grundlage eines Standard-Betreibssystems, nötigenfalls in Verbindung mit gesonderter Datenkommunikationssoftware (68, 74), gegebenenfalls nach dem TCP/IP-Protokoll, aufgebaut ist.

22. System nach einem der vorhergehenden Ansprüche, **dadurch gekennzeichnet, dass** die Kommunikationseinheit (66, 68) des Warenempfangssystems (14) beziehungsweise die Kommunikationseinheit des Bestellungsbestätigungssystems (12) einen Kommunikationsanschluss zum Anschluss des Systems an einem Sprachkommunikationsnetz oder/und an einem Datenkommunikationsnetz oder/und an einem Computernetz (20) aufweist, über das die Datenkommunikation erfolgt.

23. System nach einem der vorhergehenden Ansprüche, **dadurch gekennzeichnet, dass** die Datenkommunikation über das Internet (20) oder/und ein LAN oder/und eine WAN oder/und ein Intranet oder/und ein Extranet erfolgt.

24. System nach einem der vorhergehenden Ansprüche, **dadurch gekennzeichnet, dass** die Datenkommunikation Übersendung von Daten per E-mail oder/und Informationsübermittlung nach dem TCP/IP-Protokoll oder/und FTP-Protokoll umfasst.

25. Warenempfangsvorrichtung (18), gegebenenfalls für ein ein Warenempfangssystem (14) umfassendes System gemäß einem der vorhergehenden Ansprüche, umfassend:
- eine eine Warendurchlassöffnung begrenzende, einen Rahmen oder eine Wandung umfassende Begrenzung (100);
- eine relativ zur Begrenzung bewegbar angeordnete Verschlussanordung (112), die zwischen einer Öffnungstellung, in der die Warendurchlassöffnung offen ist, und einer Verschließstellung, in der die Warendurchlassöffnung verschlossen ist, bewegbar ist;
- eine zwischen der Begrenzung und der Verschlussanordnung angeordnete Antriebs- oder/und Verriegelungsanordnung, die dafür ausgelegt ist, wahlweise
-- in einem ersten Modus die Verschlussanordnung (112) in die Verschließstellung zu bringen oder/und in dieser zu halten und
-- in einem zweiten Modus eine Verstellung der Verschlussanordnung (112) in die Öffnungsstellung zuzulassen oder die Verschlussanordnung in die Öffnungsstellung zu bringen,
wobei der Antriebs- oder/und Verriegelungsanordung eine elektronische Schaltung (32) zugeordnet ist, über die die Antriebs- oder/und Verriegelungsanordnung zwischen dem ersten und dem zweiten Modus umschaltbar ist in Abhängigkeit von wenigstens einem der elektronischen Schaltung zugeführten Signal.

26. Warenempfangsvorrichtung nach Anspruch 25, **dadurch gekennzeichnet, dass** die Begrenzung samt der Verschlussanordnung und der Antriebs- oder/und Verriegelungsanordnung in eine auf den Rahmen abgestimmte Öffnung oder Aussparung in einer Wand, in einem Türflügel einer Tür, in einem Fensterflügel eines Fensters eingesetzt oder einsetzbar ist, um einen dahinter liegenden Raum oder Bereich als Warenaufnahmeraum oder Warenaufnahmebereich für vermittels der Warenempfangsvorrichtung angenommene Ware zu nutzen.

27. Warenempfangsvorrichtung nach Anspruch 25, **gekennzeichnet durch** ein die Begrenzung aufweisendes Gehäuse (100), in dem wenigstens ein Warenaufnahmeraum (102) vorgesehen ist, in den Ware von außen **durch** die Warendurchlassöffnung einführbar ist.

28. Warenempfangsvorrichtung nach Anspruch 27, **dadurch gekennzeichnet, dass** das Gehäuse wenigstens eine gegenüber der Warendurchlassöffnung gesonderte Waranentnahmeöffnung (vgl. 136, 138) aufweist.

29. Warenempfangsvorrichtung nach Anspruch 27 oder 28, **dadurch gekennzeichnet, dass** das Gehäuse (100) in eine Aussparung oder Öffnung in einer Wand (110) eingesetzt oder einsetzbar ist, wobei im Falle wenigstens einer gegenüber der Warendurchlassöffnung gesonderten Warenentnahmeöffnung diese sich vorzugsweise zu einem hinter der Wand liegenden Bereich öffnet, während die Warendurchlassöffnung sich zu einem vor der Wand liegenden Bereich öffnet.

30. Warenempfangsvorrichtung nach einem der Anspruch 27 bis 29, **dadurch gekennzeichnet, dass** in dem Gehäuse (100) ein mittels einer weiteren Verschlussanordnung (120) gegenüber dem Warenaufnahmeraum (102) verschließbarer Warenaufnahmebereich (104) vorgesehen ist, wobei die weitere Verschlussanordnung (120) zwischen einer Öffnungsstellung, in der eine den Warenaufnahmebereich (104) mit dem Warenaufnahmebereich (102) verbindende Warendurchlassöffnung offen ist, und einer Verschließstellung, in der diese Warendurchlassöffnung verschlossen ist, bewegbar ist, wobei der weiteren Verschlussanordnung eine weitere Antriebs- oder/und Verriegelungsanordnung zugeordnet ist, die dafür ausgelegt ist, wahlweise
-- in einem ersten Modus die Verschlussanordnung (120) in die Verschließstellung zu bringen oder/und in dieser zu halten und
-- in einem zweiten Modus eine Verstellung der Verschlussanordnung (120) in die Öffnungsstellung zuzulassen oder die Verschlussanordnung in die Öffnungsstellung zu bringen,
und wobei der weiteren Antriebs- oder/und Verriegelungsanordung eine elektronische Schaltung (32) zugeordnet ist, über die die Antriebs- oder/und Verriegelungsanordnung zwischen dem ersten und dem zweiten Modus umschaltbar ist in Abhängigkeit von wenigstens einem der elektronischen Schaltung zugeführten Signal.

31. Warenempfangsvorrichtung nach einem der Ansprüche 27 bis 30, **dadurch gekennzeichnet, dass** der Warenaufnahmeraum oder/und - im Falle einer Ausbildung nach Anspruch 30 - der Warenaufnahmebereich (104) eine Lageranordnung mit mehreren Warenlagerplätzen (130) und einer vorzugsweise motorisch abgetriebenen Fördereinrichtung (132) zum Fördern von Ware zu einem jeweiligen Lagerplatz aufweist.

32. Warenempfangsvorrichtung nach Anspruch 31, **dadurch gekennzeichnet, dass** die Fördereinrichtung wenigstens eine vertikal oder/und horizontal verfahrbare Förderplattform (130) aufweist.

33. Warenempfangsvorrichtung nach einem der Ansprüch 27 bis 32, **gekennzeichnet durch** eine Mehrzahl von Empfangseinheiten umfassend jeweils mindestens einen Warenaufnahmeraum mit einer dieser zugeordneten, zum Verschließen einer jeweiligen Warendurchlassöffnung dienenden Verschlussanordnung, sowie gewünschtenfalls umfassend jeweils einen Warenaufnahmebereich entsprechend Anspruch 30.

34. Warenempfangsvorrichtung nach Anspruch 33, **dadurch gekennzeichnet, dass** wenigstens einige der Empfangseinheiten verschiedenen Warenempfangssystemen zugeordnet sind oder verschiedenen Empfangssystemen zugeordnet werden können.

35. Warenempfangsvorrichtung nach einem der Ansprüche 27 bis 34, **dadurch gekennzeichnet, dass** sie mit wenigstens einem bedarfsweise an- und ausschaltbarem Kühlaggregat (160) ausgestattet ist, gewünschtenfalls mit mehreren, verschiedenen Empfangseinheiten zugeordneten Kühlaggregaten.

36. Kombination aus wenigstens einer Warenempfangsvorrichtung nach einem der Ansprüche 25 bis 35 und wenigstens einem, vorzugsweise einer Mehrzahl von Warentransportbehältern (106), die abmessungsmäßig auf die Warenempfangsvorrichtung (18) abgestimmt sind und in deren Warenaufnahmeraum (102) beziehungsweise deren Warenaufnahmebereich (104) aufgenommen werden können.

37. Verfahren zum Bestätigen von Warenbestellungen und zum Annehmen von auf die Warenbestellungen gelieferter Ware, umfassend die Schritte:
a1) Empfangen, vermittels Datenkommunikation, von sich auf eine anstehende Warenlieferung oder anstehende Warenlieferungen beziehenden Daten und Abspeichern von auf den empfangenden Daten beruhenden Daten, die die anstehende(n) Warenlieferung(en) identifizieren,
a2) in Antwort auf eine Annahmeanforderung: Aufnehmen von sich auf gelieferte Ware beziehenden Daten und Vergleichen dieser Daten mit den abgespeicherten Daten,
a3) im Falle, dass keine Annahmeanforderung vorliegt, eine Warenannahmekapazität erschöpft ist oder der Vergleich zwischen den aufgenommenen Daten und den abgespeicherten Daten ergibt, dass die Annahmeanforderung nicht zulässig ist: Halten eines Warenaufnahmeraums in einem von einer Außenseite her unzugänglichen Zustand,
a4) im Falle, dass der Vergleich zwischen den aufgenommenen Daten und den abgespeicherten Daten ergibt, dass die Annahmeanforderung zulässig ist und die Warenannahmekapazität nicht erschöpft ist: Versetzen des Warenaufnahmeraums in einen von der Außenseite her zugänglichen Zustand.

38. Verfahren nach Anspruch 37 zur Anwendung in Verbindung mit einem System nach einem der Ansprüche 1 bis 24, das das Verfahren ausführt.
